(19)

Europäisches
Patentamt
European
Patent Office
Office européen
des brevets

(11) **EP 4 561 178 A1**

(12) **EUROPEAN PATENT APPLICATION**
published in accordance with Art. 153(4) EPC

(43) Date of publication:
**28.05.2025 Bulletin 2025/22**

(21) Application number: **23851752.8**

(22) Date of filing: **07.08.2023**

(51) International Patent Classification (IPC):
***H04W 40/02*** (2009.01)

(52) Cooperative Patent Classification (CPC):
**H04W 40/02; H04W 48/16**

(86) International application number:
**PCT/CN2023/111411**

(87) International publication number:
**WO 2024/032531 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.08.2022 CN 202210957899**

(71) Applicant: **Huawei Technologies Co., Ltd.
Shenzhen, Guangdong 518129 (CN)**

(72) Inventors:
- **WANG, Yaxin
  Shenzhen, Guangdong 518129 (CN)**
- **SUN, Haiyang
  Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **COMMUNICATION METHOD, APPARATUS, AND SYSTEM**

(57) Embodiments of this application provide a communication method, apparatus, and system, and relate to the communication field. The method includes: A network element receives, from a controller, configuration information and information about a first node; determines an identifier of a terminal device based on the information about the first node; determines first requirement information based on the configuration parameter information; and sends the first requirement information to a policy control function network element, where the first requirement information is for adjusting a session of the terminal device, the configuration information includes a parameter for configuring a flow, the flow is a flow between the terminal device and a second node, and the first node is a node that is between the terminal device and the second node and that is for transmission of the flow. In this way, the network element parses the configuration information and the information about the first node into the first requirement information and the identifier of the terminal device that can be identified by the policy control function network element, so that the policy control function network element can specifically adjust the session of the terminal device based on a requirement and a characteristic of the flow, thereby improving transmission quality of the flow.

S610: A TSCTSF network element receives first configuration information delivered by a DetNet controller

S620: The TSCTSF network element determines, based on an identifier of a first node, an identifier that is of a UE and that corresponds to the first configuration information

S630: The TSCTSF network element converts configuration information of a DetNet flow into first requirement information based on topology information of the DetNet flow, where the first requirement information is requirement information for the first node

S640: The TSCTSF network element determines, based on the identifier that is of the UE and that corresponds to the first configuration information, the first requirement information associated with the identifier of the UE

S650: The TSCTSF network element sends the first requirement information associated with the identifier of the UE to a PCF network element, so that the PCF network element updates a policy and charging control rule based on the first requirement information associated with the identifier of the UE, and indicates an SMF network element to adjust a session corresponding to the UE

FIG. 6

## Description

This application claims priority to Chinese Patent Application No. 202210957899.0, filed with the China National Intellectual Property Administration on August 10, 2022 and entitled "COMMUNICATION METHOD, APPARATUS, AND SYSTEM", which is incorporated herein by reference in its entirety.

## TECHNICAL FIELD

This application relates to the communication field, and more specifically, to a communication method, apparatus, and system.

## BACKGROUND

A deterministic network (deterministic network, DetNet) can provide a capability of deterministic service guarantee for a carried service in a network domain. Therefore, in recent years, DetNet-related technologies are widely applied to scenarios that have high requirements on latency, such as industrial control, telemedicine, and online gaming. However, in these scenarios, a session corresponding to a terminal device needs to be adjusted, for transmission of a DetNet flow through the session of the terminal device.

When the terminal device requests to establish a time sensitive session, related information of a DetNet node to which the terminal device belongs needs to be reported to a DetNet controller, and the DetNet controller delivers corresponding configuration information of the DetNet flow to the node. However, an existing processing mechanism of reporting DetNet node information and configuring a DetNet requirement is implemented in a related mechanism, of a time sensitive communication (time sensitive communication, TSC) protocol, in which the node to which the terminal device belongs is identified by specifying a specific port or MAC address. If the TSC protocol mechanism is directly replaced with a related mechanism of a DetNet protocol, reporting of the node information and configuration of the node requirement cannot be implemented.

Consequently, an existing communication system cannot ensure transmission of the DetNet flow.

## SUMMARY

Embodiments of this application provide a communication method, apparatus, and system, to ensure transmission of a DetNet flow.

According to a first aspect, a communication method is provided. The method includes: A network element receives, from a controller, configuration information and information about a first node. The network element determines an identifier of a terminal device based on the information about the first node, determines first requirement information based on the configuration parameter information, and sends the first requirement information to a policy control function network element, so that the policy control function network element adjusts a session of the terminal device. The configuration information includes a parameter for configuring a flow, the flow is a flow between the terminal device and a second node, and the first node is a node that is between the terminal device and the second node and that is for transmission of the flow.

According to the method, the network element parses the configuration information of the flow and the information about the first node delivered by the controller into the first requirement information and the identifier of the terminal device that can be identified by the policy control function network element, so that the policy control function network element can specifically adjust the session of the terminal device based on a requirement and a characteristic of the flow, thereby improving transmission quality of the flow.

With reference to the first aspect, in some implementations of the first aspect, the flow is a deterministic network flow, and the network element is a time sensitive communication and time synchronization function network element.

With reference to the first aspect, in some implementations of the first aspect, that the network element sends the first requirement information to the policy control function network element may be: The network element sends a message to the policy control function network element, for example, a policy authorization establishment request message or a policy authorization update request message, where the message includes the first requirement information and the identifier of the terminal device. In this way, the network element sends both the first requirement information and the identifier of the terminal device to the policy control function network element, to more directly and clearly notify the policy control function network element that the first requirement information is associated with the identifier of the terminal device, and the first requirement information is for adjusting the session of the terminal device, so that the policy control function network element specifically adjusts the session of the terminal device based on the first requirement information, and processing efficiency of the policy control function network element is improved.

With reference to the first aspect, in some implementations of the first aspect, before the network element receives, from the controller, the configuration parameter information for configuring the flow and the information about the first node, the method further includes: The network element receives routing information, where the routing information includes a second identifier and routing interface information. That the network element determines the identifier of the terminal device based on the information about the first node includes: When the information about the first node matches the routing interface information, the network element determines the second identifier as the identifier of the terminal device. In this way, the network element can quickly and accurately determine the identifier of the terminal device by matching the information about the first node delivered by the controller with the routing information.

With reference to the first aspect, in some implementations of the first aspect, the information about the first node includes incoming interface information, outgoing interface information, and neighbor node information, and the routing interface information includes routing interface information of the terminal device corresponding to the second identifier, routing interface information of a user plane function network element, and neighbor node information of the user plane function network element. The second node is a network device, the flow is an uplink flow between the terminal device and the network device, and when the information about the first node matches the routing interface information, the incoming interface information corresponds to the routing interface information of the terminal device corresponding to the second identifier, the outgoing interface information corresponds to the routing interface information of the user plane function network element, and the neighbor node information corresponds to the neighbor node information of the user plane function network element. In other words, when the incoming interface information corresponds to the routing interface information of the terminal device corresponding to the second identifier, the outgoing interface information corresponds to the routing interface information of the user plane function network element, and the neighbor node information corresponds to the neighbor node information of the user plane function network element, the network element determines that the information about the first node matches the routing interface information.

With reference to the first aspect, in some implementations of the first aspect, the information about the first node includes incoming interface information, outgoing interface information, and neighbor node information, and the routing interface information includes routing interface information of the terminal device corresponding to the second identifier, routing interface information of a user plane function network element, and neighbor node information of the terminal device corresponding to the second identifier. The second node is a network device, the flow is a downlink flow between the terminal device and the network device, and when the information about the first node matches the routing interface information, the incoming interface information corresponds to the routing interface information of the user plane function network element, the outgoing interface information corresponds to the routing interface information of the terminal device corresponding to the second identifier, and the neighbor node information corresponds to the neighbor node information of the terminal device corresponding to the second identifier. In other words, when the incoming interface information corresponds to the routing interface information of the user plane function network element, the outgoing interface information corresponds to the routing interface information of the terminal device corresponding to the second identifier, and the neighbor node information corresponds to the neighbor node information of the terminal device corresponding to the second identifier, the network element determines that the information about the first node matches the routing interface information.

With reference to the first aspect, in some implementations of the first aspect, the routing interface information includes the routing interface information of the terminal device corresponding to the second identifier, the routing interface information of the user plane function network element, and the neighbor node information of the user plane function network element. The second node is the network device, and the flow is the uplink flow between the terminal device and the network device. That the network element receives routing information includes: The network element receives the routing interface information of the terminal device corresponding to the second identifier from the terminal device corresponding to the second identifier. The network element receives the routing interface information of the user plane function network element and the neighbor node information of the user plane function network element from the user plane function network element.

With reference to the first aspect, in some implementations of the first aspect, the routing interface information includes the routing interface information of the terminal device corresponding to the second identifier, the routing interface information of the user plane function network element, and the neighbor node information of the terminal device corresponding to the second identifier. The second node is the network device, and the flow is the downlink flow between the terminal device and the network device. That the network element receives routing information includes: The network element receives, from the terminal device corresponding to the second identifier, the routing interface information of the terminal device corresponding to the second identifier and the neighbor node information of the terminal device corresponding to the second identifier. The network element receives the routing interface information of the user plane function network element from the user plane function network element.

With reference to the first aspect, in some implementations of the first aspect, that the network element receives routing information includes: The network element receives the routing information from the user plane function network element.

According to a second aspect, a measurement report reporting method is provided. The method includes: A time sensitive communication and time synchronization function (time sensitive communication and time synchronization function, TSCTSF) network element receives first configuration information delivered by a deterministic network DetNet controller, where the first configuration information carries an identifier of a first node and next-hop information of the first node, the first node is configured to configure a DetNet flow (DetNet Flow) based on the first configuration information, to adjust a session corresponding to a terminal device (user equipment, UE), the first node includes the UE and a user plane function UPF network element, and the first node is a node in the DetNet flow. The TSCTSF network element determines, based on the identifier of the first node, an identifier that is of the UE and that corresponds to the first configuration information, to determine the session that is of the UE and that corresponds to the first configuration information.

For example, in some possible embodiments, an SMF network element cannot configure the session between the specified UE and the UPF network element based on the identifier of the first node. However, the TSCTSF network element has previously determined an association relationship between the identifier of the UE and first routing information, the first routing information includes the identifier of the first node, and first requirement information delivered by the DetNet controller also includes the identifier of the first node. Therefore, the TSCTSF determines, by identifying specific content of the identifier of the first node, that the identifier of the first node corresponds to the identifier of the UE, to determine, in this manner, that the first requirement information is configured for the session of the UE.

Based on the foregoing technical solution, although the first configuration information is configuration information for the first node, it can be determined, by determining the identifier that is of the UE and that corresponds to the first configuration information, that the first configuration information corresponds to the session of the UE. Therefore, this can be used as a prerequisite for adjusting the session of the UE based on the first configuration information.

With reference to the second aspect, in some implementations of the second aspect, before the TSCTSF network element receives the first configuration information delivered by the DetNet controller, the TSCTSF network element receives the identifier of the first node from a policy control function (policy control function, PCF) network element, where the first node is configured to adjust, by configuring the deterministic network DetNet flow, the session corresponding to the terminal device, the first node includes the UE and the UPF network element, and the first node is the node in the DetNet flow. The TSCTSF network element determines the first routing information, where the first routing information includes the identifier of the first node, routing interface information, and information about a neighbor node connected to a routing interface. The TSCTSF network element sends the first routing information to the DetNet controller.

For example, the identifier of the first node may be generated by the SMF network element, and the identifier of the first node may be the identifier of the UE, or may be an identifier of the UPF that establishes the session with the UE. It should be understood that the SMF can obtain the identifier of the UE and the identifier of the UPF when receiving a session establishment request of the UE. The session request may include a data network name (data network name, DNN), single network slice selection assistance information (single network slice selection assistance information, S-NSSAI), and DetNet indication information. The DetNet indication information may indicate to transmit the DetNet flow through the session corresponding to the UE.

It should be understood that the first routing information represents routing information of the first node.

Based on the foregoing technical solution, the TSCTSF network element can determine the first routing information that uses the first node as an object, and report the first routing information of the first node to the DetNet controller, so that a function of reporting node information to the DetNet controller based on a DetNet protocol is implemented.

With reference to the second aspect, in some implementations of the second aspect, the TSCTSF network element receives UE-side routing information sent by the UE or a device-side time-sensitive networking translator (device-side time-sensitive networking translator, DS-TT), where the UE-side routing information includes the identifier of the first node, routing interface information of the UE, and information about a neighbor node connected to a routing interface of the UE. The TSCTSF network element receives UPF network element-side routing information sent by the UPF network element or a network-side time-sensitive networking translator (network-side time-sensitive networking translator, NW-TT), where the UPF network element-side routing information includes the identifier of the first node, routing interface information of the UPF network element, and information about a neighbor node connected to a routing interface of the UPF network element. The TSCTSF network element determines the first routing information based on the UE-side routing information and the UPF network element-side routing information.

With reference to the second aspect, in some implementations of the second aspect, the TSCTSF network element receives: UPF network element-side routing information sent by the UPF network element or an NW-TT, where the UPF network element-side routing information includes the identifier of the first node, routing interface information of the UPF network element, and information about a neighbor node connected to a routing interface of the UPF network element; and UE-side routing information collected and forwarded by the UPF network element or the NW-TT, where the UE-side routing information includes the identifier of the first node, routing interface information of the UE, and information about a neighbor node connected to a routing interface of the UE. The TSCTSF network element determines the first routing information based on the UE-side routing information and the UPF network element-side routing information.

It should be understood that, after the session is established, the UPF network element may actively collect the UE-side routing information of the UE.

For example, the UE-side routing information and the UPF network element-side routing information may be uploaded to the TSCTSF network element in a form of a DetNet information report, and may be specifically in the following forms:

a DetNet information report (the identifier of the first node, the routing interface information of the UE, and the information about the neighbor node connected to the routing interface of the UE); and

a DetNet information report (the identifier of the first node, the routing interface information of the UPF network element, and the information about the neighbor node connected to the routing interface of the UPF network element).

For example, the first routing information may be a combination of the UE-side routing information and the UPF network element-side routing information.

Based on the foregoing technical solution, the TSCTSF network element can generate the first routing information for the first node based on the UE-side routing information and the UPF network element-side routing information, so that the TSCTSF network element can subsequently send the routing information of the first node to the DetNet controller, to adapt to the node information reporting function in the DetNet protocol.

With reference to the second aspect, in some implementations of the second aspect, the routing interface information includes the routing interface information of the UE and the routing interface information of the UPF network element, and the information about the neighbor node connected to the routing interface includes the information about the neighbor node connected to the routing interface of the UE and the information about the neighbor node connected to the routing interface of the UPF network element.

It should be understood that, when transmission directions (uplink or downlink) of a data flow are different, an incoming routing interface and an outgoing routing interface of the first node are also different. For example, for uplink transmission, the incoming routing interface of the first node is the routing interface of the UE, and therefore related information of the incoming routing interface corresponds to the routing interface information of the UE; and for downlink transmission, the incoming routing interface of the first node is the routing interface of the UPF network element, and therefore, related information of the incoming routing interface corresponds to the routing interface information of the UPF network element. The outgoing routing interface is similar to this.

With reference to the second aspect, in some implementations of the second aspect, the UE-side routing information and the UPF network element-side routing information further include the identifier of the UE, and the TSCTSF network element determines the association relationship between the identifier of the UE and the first routing information.

Based on the foregoing technical solution, although a network element in a 5G core network (5G core network, 5GC) cannot directly identify the identifier of the first node, the association relationship between the identifier of the UE and the first routing information is established, so that the 5GC network element can determine that the first routing information corresponds to the session of the UE.

With reference to the second aspect, in some implementations of the second aspect, the TSCTSF network element receives the first configuration information delivered by the DetNet controller, where the first configuration information includes the identifier of the first node and the next-hop information of the first node. The TSCTSF network element determines, based on the identifier of the first node, the identifier that is of the UE and that corresponds to the first configuration information.

With reference to the second aspect, in some implementations of the second aspect, when the identifier of the first node is the identifier of the UE, the TSCTSF network element determines, based on the identifier of the first node, the identifier that is of the UE and that corresponds to the first configuration information. When the identifier of the first node is an identifier of the UPF network element, the TSCTSF network element matches the next-hop information of the first node with the first routing information. When the next-hop information of the first node successfully matches the first routing information, the TSCTSF network element determines, based on the identifier of the UE that has the association relationship with the first routing information, the identifier that is of the UE and that corresponds to the first configuration information.

With reference to the second aspect, in some implementations of the second aspect, incoming interface information, outgoing interface information, and information about a neighbor node connected to an outgoing interface that are included in the next-hop information of the first node respectively belong to the routing interface information of the UE, the routing interface information of the UPF network element, and the information about the neighbor node connected to the routing interface of the UPF network element. Alternatively, incoming interface information, outgoing interface information, and information about a neighbor node connected to an outgoing interface that are included in the next-hop information of the first node respectively belong to the routing interface information of the UPF network element, the routing interface information of the UE, and the information about the neighbor node connected to the routing interface of the UE.

Based on the foregoing technical solution, the identifier that is of the UE and that corresponds to the first configuration information is determined by matching the next-hop information of the first node with the first routing information, so that it can be determined that the first configuration information corresponds to the session corresponding to the UE. Therefore, this can be used as a prerequisite for adjusting the session of the UE based on the first configuration information.

With reference to the second aspect, in some implementations of the second aspect, the identifier of the UE is an IP address or a generic public subscription identifier (generic public subscription identifier, GPSI) of the UE, and the identifier of the UPF network element is an IP address or a name of the UPF network element.

With reference to the second aspect, in some implementations of the second aspect, the first configuration information further includes configuration information of the DetNet flow and topology information of the DetNet flow. The method further includes: The TSCTSF network element converts the configuration information of the DetNet flow into the first requirement information based on the topology information of the DetNet flow, where the first requirement information is requirement information for the first node.

For example, the TSCTSF network element prestores a mapping relationship between a configuration parameter in the configuration information of the DetNet flow and a requirement parameter in the first requirement information, to implement a function of converting the configuration parameter into the requirement parameter.

For example, the configuration information of the DetNet flow is requirement information at a flow granularity, and the TSCTSF network element may determine a quantity of nodes in the DetNet flow based on the topology information of the DetNet flow. The TSCTSF network element converts the configuration information of the DetNet flow into the first requirement information at a node granularity based on the quantity of nodes in the DetNet flow.

For example, the configuration information of the DetNet flow is a configuration of a latency requirement. For example, a specific quantity of data packets are sent within 60 ms. The topology information of the DetNet flow includes the first node, a second node, a third node, and a fourth node. The four nodes divide the DetNet flow into three segments. Therefore, the TSCTSF network element may divide the latency requirement by 3 to determine the first requirement information, and use the first requirement information as a latency requirement of the first node.

Based on the foregoing technical solution, the TSCTSF network element converts the first configuration information associated with the identifier of the first node into the first requirement information that is associated with the identifier of the UE and that can be identified by the PCF network element or the like, and converts the requirement information for the DetNet flow into the requirement information for the DetNet node.

With reference to the second aspect, in some implementations of the second aspect, the TSCTSF network element determines, based on the identifier that is of the UE and that corresponds to the first configuration information, first requirement information associated with the identifier of the UE. The TSCTSF network element sends the first requirement information associated with the identifier of the UE to the PCF network element, so that the PCF network element updates a policy and charging control rule based on the first requirement information associated with the identifier of the UE, and indicates the SMF network element to adjust the session corresponding to the UE.

It should be understood that the SMF network element adjusts the session corresponding to the UE, so that the DetNet flow can be deterministically transmitted through the session of the specified UE.

Based on the foregoing technical solution, the first requirement information associated with the identifier of the UE is determined, so that the network element in the 5GC can determine a session corresponding to which UE the first requirement information is specifically for, and a function of parsing the configuration information related to the DetNet node and adjusting the session corresponding to the specified UE is implemented.

According to a third aspect, a communication method is provided. The method includes: A deterministic network application function (deterministic network application function, DetNet AF) network element receives first configuration information delivered by a DetNet controller, where the first configuration information carries an identifier of a first node and next-hop information of the first node, the first node is configured to configure a DetNet flow based on the first configuration information, to adjust a session corresponding to a UE, the first node includes the UE and a user plane function UPF network element, and the first node is a node in the DetNet flow. The DetNet AF network element determines, based on the identifier of the first node, an identifier that is of the UE and that corresponds to the first configuration information, to determine the session that is of the UE and that corresponds to the first configuration information.

With reference to the third aspect, in some implementations of the third aspect, before the DetNet AF network element receives the first configuration information delivered by the DetNet controller, the DetNet AF receives first routing information that is associated with the identifier of the UE and that is from a TSCTSF network element, where the first routing information includes the identifier of the first node, routing interface information, and information about a neighbor node connected to a routing interface, the first node is configured to adjust, by configuring the DetNet flow, the session corresponding to UE, the first node includes the UE and the user plane function UPF network element, and the first node is the node in the DetNet flow. The DetNet AF network element sends the first routing information to the DetNet controller.

For example, the identifier of the first node may be generated by the SMF network element, and the identifier of the first node may be the identifier of the UE, or may be an identifier of the UPF that establishes the session with the UE. It should be understood that the SMF can obtain the identifier of the UE and the identifier of the UPF when receiving a session establishment request of the UE. The session request may include a data network name (data network name, DNN), single network slice selection assistance information (single network slice selection assistance information, S-NSSAI), and DetNet indication information. The DetNet indication information may indicate to transmit the DetNet flow through the session corresponding to the UE.

It should be understood that the first routing information represents routing information of the first node.

Based on the foregoing technical solution, the DetNet AF network element can determine the first routing information that uses the first node as an object, and report the first routing information of the first node to the DetNet controller, so that a function of reporting node information to the DetNet controller based on a DetNet protocol is implemented, and corresponding modification or adjustment on an existing data information processing mechanism for the TSCTSF network element to implement the function is avoided.

With reference to the third aspect, in some implementations of the third aspect, the first routing information associated with the identifier of the terminal device UE is determined by the TSCTSF network element based on UE-side routing information and UPF network element-side routing information. The UE-side routing information is sent by the UE or a device-side time-sensitive networking translator DS-TT, and includes the identifier of the UE, the identifier of the first node, routing interface information of the UE, and information about a neighbor node connected to a routing interface of the UE. The UPF routing information is sent by the UPF network element or a network-side time-sensitive networking translator NW-TT, and includes the identifier of the UE, the identifier of the first node, routing interface information of the UPF network element, and information about a neighbor node connected to a routing interface of the UPF network element.

With reference to the third aspect, in some implementations of the third aspect, the first routing information associated with the identifier of the terminal device UE is determined by the TSCTSF network element based on UE-side routing information and UPF network element-side routing information. The UE-side routing information is collected and sent by the UPF network element or an NW-TT, and includes the identifier of the UE, the identifier of the first node, routing interface information of the UE, and information about a neighbor node connected to a routing interface of the UE. The UPF routing information is sent by the UPF network element or the NW-TT, and includes the identifier of the UE, the identifier of the first node, routing interface information of the UPF network element, and information about a neighbor node connected to a routing interface of the UPF network element.

It should be understood that, after the session is established, the UPF network element may actively collect the UE-side routing information of the UE.

For example, the UE-side routing information and the UPF network element-side routing information may be uploaded to the TSCTSF network element in a form of a DetNet information report, and may be specifically in the following forms:

a DetNet information report (the identifier of the first node, the routing interface information of the UE, and the information about the neighbor node connected to the routing interface of the UE); and

a DetNet information report (the identifier of the first node, the routing interface information of the UPF network element, and the information about the neighbor node connected to the routing interface of the UPF network element).

Based on the foregoing technical solution, the TSCTSF network element can generate the first routing information for the first node based on the UE-side routing information and the UPF network element-side routing information, so that the TSCTSF network element can subsequently send the routing information of the first node to the DetNet AF, and send the routing information of the first node to the DetNet controller via the DetNet AF network element, to adapt to the node information reporting function in the DetNet protocol.

With reference to the third aspect, in some implementations of the third aspect, the routing interface information includes the routing interface information of the UE and the routing interface information of the UPF network element, and the information about the neighbor node connected to the routing interface includes the information about the neighbor node connected to the routing interface of the UE and the information about the neighbor node connected to the routing interface of the UPF network element.

It should be understood that, when transmission directions (uplink or downlink) of a data flow are different, an incoming routing interface and an outgoing routing interface of the first node are also different. For example, for uplink transmission, the incoming routing interface of the first node is the routing interface of the UE, and therefore related information of the incoming routing interface corresponds to the routing interface information of the UE; and for downlink transmission, the incoming routing interface of the first node is the routing interface of the UPF network element, and therefore, related information of the incoming routing interface corresponds to the routing interface information of the UPF network element. The outgoing routing interface is similar to this.

With reference to the third aspect, in some implementations of the third aspect, before the DetNet AF network element receives the first routing information that is associated with the identifier of the UE and that is from the TSCTSF network element, the method further includes: The DetNet AF network element sends first request information to the TSCTSF network element, where the first request information requests the TSCTSF network element to send the stored first routing information associated with the identifier of the UE to the DetNet AF network element.

Based on the foregoing technical solution, although a network element in a 5G core network (5G core network, 5GC) cannot directly identify the identifier of the first node, the association relationship between the identifier of the UE and the first routing information is established, so that the 5GC network element can determine that the first routing information corresponds to the session corresponding to the UE.

With reference to the third aspect, in some implementations of the third aspect, the DetNet AF network element receives the first configuration information delivered by the DetNet controller, where the first configuration information includes the identifier of the first node and the next-hop information of the first node. The DetNet AF network element determines, based on the identifier of the first node, the identifier that is of the UE and that corresponds to the first configuration information.

For example, in some possible embodiments, an SMF network element cannot configure the session between the specified UE and the UPF network element based on the identifier of the first node. However, the DetNet AF network element has previously determined an association relationship between the identifier of the UE and first routing information by using the TSCTSF network element, the first routing information includes the identifier of the first node, and first requirement information delivered by the DetNet controller also includes the identifier of the first node. Therefore, the DetNet AF determines, by identifying specific content of the identifier of the first node, that the identifier of the first node corresponds to the identifier of the UE, to determine, in this manner, that the first requirement information is configured for the session corresponding to the UE.

Based on the foregoing technical solution, although the first configuration information is configuration information for the first node, it can be determined, by determining the identifier that is of the UE and that corresponds to the first configuration information, that the first configuration information corresponds to the session corresponding to the UE. Therefore, this can be used as a prerequisite for adjusting the session corresponding to the UE based on the first configuration information.

With reference to the third aspect, in some implementations of the third aspect, when the identifier of the first node is the identifier of the UE, the DetNet AF network element determines, based on the identifier of the first node, the identifier that is of the UE and that corresponds to the first configuration information. When the identifier of the first node is an identifier of the UPF network element, the DetNet AF network element matches the next-hop information of the first node with the first routing information. When the next-hop information of the first node successfully matches the first routing information, the DetNet AF network element determines, based on the identifier of the UE that has the association relationship with the first routing information, the identifier that is of the UE and that corresponds to the first configuration information.

With reference to the third aspect, in some implementations of the third aspect, incoming interface information, outgoing interface information, and information about a neighbor node connected to an outgoing interface that are included in the next-hop information of the first node respectively belong to the routing interface information of the UE, the routing interface information of the UPF network element, and the information about the neighbor node connected to the routing interface of the UPF network element. Alternatively, incoming interface information, outgoing interface information, and information about a neighbor node connected to an outgoing interface that are included in the next-hop information of the first node respectively belong to the routing interface information of the UPF network element, the routing interface information of the UE, and the information about the neighbor node connected to the routing interface of the UE.

Based on the foregoing technical solution, the identifier that is of the UE and that corresponds to the first configuration information is determined by matching the next-hop information of the first node with the first routing information, so that it can be determined that the first configuration information corresponds to the session corresponding to the UE. Therefore, this can be used as a prerequisite for adjusting the session of the UE based on the first configuration information.

With reference to the third aspect, in some implementations of the third aspect, the identifier of the UE is an IP address or a generic public subscription identifier GPSI of the UE, and the identifier of the UPF network element is an IP address or a name of the UPF network element.

With reference to the third aspect, in some implementations of the third aspect, the first configuration information further includes configuration information of the DetNet flow and topology information of the DetNet flow. The method further includes: The DetNet AF network element converts the configuration information of the DetNet flow into the first requirement information based on the topology information of the DetNet flow, where the first requirement information is requirement information for the first node.

For example, the DetNet AF network element prestores a mapping relationship between a configuration parameter in the configuration information of the DetNet flow and a requirement parameter in the first requirement information, to implement a function of converting the configuration parameter into the requirement parameter.

For example, the configuration information of the DetNet flow is requirement information at a flow granularity, and the TSCTSF network element may determine a quantity of nodes in the DetNet flow based on the topology information of the DetNet flow. The TSCTSF network element converts the configuration information of the DetNet flow into the first requirement information at a node granularity based on the quantity of nodes in the DetNet flow.

For example, the configuration information of the DetNet flow is a configuration of a latency requirement. For example, a specific quantity of data packets are sent within 60 ms. The topology information of the DetNet flow includes the first node, a second node, a third node, and a fourth node. The four nodes divide the DetNet flow into three segments. Therefore, the DetNet AF network element may divide the latency requirement by 3 to determine the first requirement information, and use the first requirement information as a latency requirement of the first node.

Based on the foregoing technical solution, the DetNet AF network element converts the first configuration information associated with the identifier of the first node into the first requirement information that is associated with the identifier of the UE and that can be identified by a PCF network element or the like, and converts the requirement information for the DetNet flow into the requirement information for the DetNet node, and corresponding modification or adjustment on an existing data information processing mechanism for the TSCTSF network element to implement the function is avoided.

With reference to the third aspect, in some implementations of the third aspect, the DetNet AF network element determines, based on the identifier that is of the UE and that corresponds to the first configuration information, first requirement information associated with the identifier of the UE. The DetNet AF network element sends, to the TSCTSF network element, the first requirement information that is associated with the identifier of the UE and that is forwarded by the TSCTSF network element, so that the PCF network element updates a policy and charging control rule based on the first requirement information associated with the identifier of the UE, and indicates the SMF network element to adjust the session corresponding to the UE.

Based on the foregoing technical solution, the first requirement information associated with the identifier of the UE is determined, so that the network element in the 5GC can determine a session corresponding to which UE the first requirement information is specifically for, and a function of parsing the configuration information related to the DetNet node and adjusting the session corresponding to the specified UE is implemented.

According to a fourth aspect, a communication apparatus is provided. The apparatus includes a processor. The processor is coupled to a memory, the memory is configured to store a program or instructions, and when the program or the instructions are executed by the processor, the apparatus is enabled to perform the method in any one of the possible implementations of the method designs in the first aspect, the second aspect, and the third aspect.

According to a fifth aspect, a computer-readable storage medium is provided. The computer-readable storage medium stores a computer program or instructions. The computer program or the instructions are for implementing the method in any one of the possible implementations of the method designs in the first aspect, the second aspect, and the third aspect.

According to a sixth aspect, a chip is provided. The chip includes a processor. The processor is configured to perform the method in any one of the possible implementations of the method designs in the first aspect, the second aspect, and the third aspect.

For example, the chip may be a baseband chip.

According to a seventh aspect, a computer program product is provided. The computer program product includes a computer program or instructions, and when the computer program or the instructions are executed by a computer, an apparatus is enabled to perform the method in any one of the possible implementations of the method designs in the first aspect, the second aspect, and the third aspect.

According to an eighth aspect, a communication method is provided. The method includes: A network element receives, from a controller, configuration information and information about a first node. The network element determines an identifier of a terminal device based on the information. The network element determines first requirement information based on the configuration parameter information, where the first requirement information is for adjusting a session of the terminal device. The network element sends the first requirement information to a policy control function network element. The policy control function network element adjusts the session of the terminal device based on the first requirement information. The configuration information includes a parameter for configuring a flow, the flow is a flow between the terminal device and a second node, and the first node is a node that is between the terminal device and the second node and that is for transmission of the flow.

**BRIEF DESCRIPTION OF DRAWINGS**

FIG. 1 is an example of a communication system architecture according to an embodiment of this application;
FIG. 2 is an example of a DetNet protocol architecture according to an embodiment of this application;
FIG. 3 is an example of another communication system architecture according to an embodiment of this application;
FIG. 4 is a schematic flowchart of a communication method according to an embodiment of this application;
FIG. 5 is a diagram of data exchange of a communication method according to an embodiment of this application;

FIG. 6 is a schematic flowchart of another communication method according to an embodiment of this application;

FIG. 7 is a diagram of data exchange of another communication method according to an embodiment of this application;

FIG. 8 is a schematic flowchart of still another communication method according to an embodiment of this application;

FIG. 9 is a diagram of data exchange of still another communication method according to an embodiment of this application;

FIG. 10 is a schematic flowchart of yet another communication method according to an embodiment of this application;

FIG. 11(a), FIG. 11(b), and FIG. 11(c) are diagrams of data exchange of yet another communication method according to an embodiment of this application;

FIG. 12 is a block diagram of an information sending apparatus 1200 according to an embodiment of this application; and

FIG. 13 is a block diagram of an information receiving apparatus 1300 according to an embodiment of this application.

## DESCRIPTION OF EMBODIMENTS

The following describes technical solutions of embodiments of this application with reference to the accompanying drawings.

The technical solutions of embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or a new radio (new radio, NR) system, and a future communication system.

To address challenges of wireless broadband technologies and maintain a leading edge of a 3GPP network, the 3GPP standard group formulates a next generation mobile communication network architecture (next generation system), which is referred to as a 5G network architecture. The architecture not only supports access to a 5GC by using a wireless technology (such as LTE) defined in the 3GPP standard group, but also supports access to the 5GC by using a non-3GPP access technology through a non-3GPP interworking function (non-3GPP interworking function, N3IWF), a trusted non-3GPP gateway function (trusted non-3GPP gateway function, TNGF), a trusted WLAN interworking function (trusted WLAN interworking function, TWIF), or a next generation access gateway (next generation packet data gateway, NG-PDG). A core network function is divided into a user plane network element function (user plane function, UPF) and a control plane network element function (control plane function, CPF). The UPF is mainly responsible for data packet forwarding, quality of service (quality of service, QoS) control, charging information collection, and the like. The CPF is mainly responsible for user registration authentication, mobility management, delivering a data packet forwarding policy or a QoS control policy to the UPF, and the like, and may be further divided into an access and mobility management function (access and mobility management function, AMF) and an SMF.

A core network device includes, for example, a mobility management entity (mobility management entity, MME) and a broadcast/multicast service center (broadcast/multicast service center, BMSC), or may include a corresponding function entity in a 5G system, for example, a core network control plane (control plane, CP) or user plane (user plane, UP) network function, for example, the SMF or the AMF. The core network control plane may alternatively be understood as a core network control plane function (control plane function, CPF) entity.

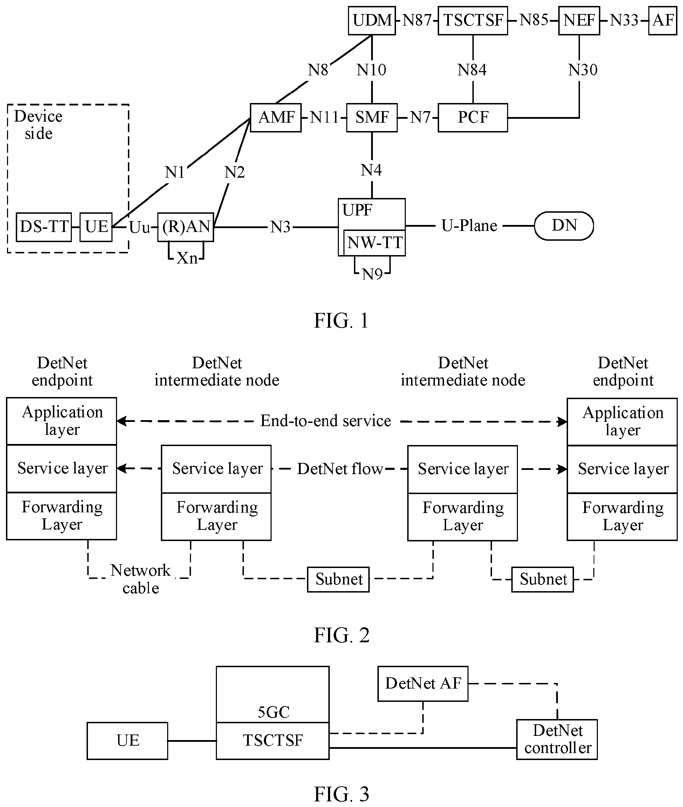

FIG. 1 is an example of a communication system architecture applicable to an embodiment of this application. Functions of a user equipment and network entities are described below.

A terminal device may be referred to as a terminal (terminal), a terminal device unit (subscriber unit), a terminal device station, a terminal device agent, a terminal device apparatus, an access terminal, a terminal in V2X communication, a subscriber unit, a UE, a subscriber station, a mobile station (mobile station, MS), a remote station, a remote terminal, a mobile device, a user terminal, a wireless communication device, a user agent, or a user apparatus. For ease of description, the terminal device in embodiments of this application is represented by the UE.

The user equipment in embodiments of this application may alternatively be a mobile phone (mobile phone), a tablet computer (pad), a computer with a wireless transceiver function, a holographic projector, a video player, a virtual reality (virtual reality, VR) terminal, an augmented reality (augmented reality, AR) terminal, a wireless terminal in industrial control (industrial control), a tactile terminal device, a vehicle-mounted terminal device, a wireless terminal in self driving (self driving), a wireless terminal in telemedicine (remote medical), a wireless terminal in a smart grid (smart grid), a wireless terminal in transportation safety (transportation safety), a wireless terminal in transportation safety, a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal in a 5G network, a terminal in a future evolved network, or the like.

The wearable device may also be referred to as a wearable intelligent device, and is a generic term for wearable devices such as head-mounted display XR glasses, gloves, watches, clothes, and shoes that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, for example, smart watches or smart glasses, and include devices that dedicated to one type of application function and need to collaboratively work with other devices such as smartphones, for example, various smart bands, or smart jewelry for monitoring physical signs.

A radio access network (radio access network, RAN) is a network including a plurality of 5G-RAN nodes, and implements a radio physical layer function, resource scheduling and radio resource management, radio access control, and a mobility management function. The 5G-RAN is connected to a UPF through a user plane interface N3, for transmission of data of the terminal device. The 5G-RAN establishes a control plane signaling connection to an AMF through a control plane interface N2, to implement a function such as radio access bearer control. The RAN may be any device with a wireless transceiver function, including but not limited to a 5G base station (5G node base, gNB), an evolved NodeB (evolutional NodeB, eNB), a wireless access point (wireless access point, WiFi AP), a worldwide interoperability for microwave access base station (worldwide interoperability for microwave access base station, WiMAX BS), a transmission reception point (transmission reception point, TRP), a wireless relay node, a wireless backhaul node, or the like.

An access network device in embodiments of this application may alternatively be a device configured to communicate with the terminal device. The access network device may be a base station (base transceiver station, BTS) in a global system for mobile communications (global system for mobile communications, GSM) or a code division multiple access (code division multiple access, CDMA) system, may be a base station (NodeB, NB) in a wideband code division multiple access (wideband code division multiple access, WCDMA) system, may be an evolved base station (evolved NodeB, eNB) in an LTE system, or may be a radio controller in a cloud radio access network (cloud radio access network, CRAN) scenario. Alternatively, the access network device may be a relay station, an access point, a vehicle-mounted device, a wearable device, an access network device in a future 5G network, an access network device in a future evolved PLMN network, or the like. This is not limited in embodiments of this application.

In NR, functions of a base station are divided into two parts, which is referred to as central unit (central unit, CU)-distributed unit (distributed unit, DU) separation. From a perspective of a protocol stack, a CU includes an RRC layer and a PDCP layer of an LTE base station, and a DU includes a radio link control (radio link control, RLC) layer, a media access control (media access control, MAC) layer, and a physical (physical, PHY) layer of the LTE base station. In common 5G base station deployment, the CU and the DU may be physically connected through an optical fiber, and logically there is a specially defined F1 interface used for communication between the CU and the DU. From a perspective of a function, the CU is mainly responsible for radio resource control and configuration, inter-cell mobility management, bearer management, and the like. The DU is mainly responsible for scheduling and physical signal generation and sending.

The base station may be a macro base station, a micro base station, a pico base station, a small cell, a relay station, a balloon station, or the like.

An access and mobility management function (access and mobility management function, AMF) is mainly responsible for functions such as authentication of a terminal device, mobility management of the terminal device, network slice selection, and SMF selection. In addition, the access and mobility management function is further responsible for transferring a user policy between the terminal device and a PCF.

An SMF is mainly responsible for control plane functions of session management of a terminal device, including selection and control of a user plane function (user plane function, UPF), identifier allocation, QoS management of a session, obtaining of a policy and charging control (policy and charging control, PCC) policy (from a PCF), and the like.

A UPF serves as an anchor point of a protocol data unit (protocol data unit, PDU) session connection, is responsible for data packet filtering, data transmission/forwarding, rate control, charging information generation, and the like of a terminal device, and provides a connection to a data network (data network, DN).

A DN is a specific data service network accessed by a terminal device. The DN is responsible for providing an operator service, internet access, or a third-party service. The DN includes a server, and the server may implement video source encoding, rendering, and the like. Typical DNs include the Internet, an IP multi-media service (IP multi-media service, IMS) network, and the like. The DN is identified by a data network name (data network name, DNN) in a 5G network.

Unified data management (unified data management, UDM) is mainly configured to manage and control user data, for example, manage subscription information, including: obtain the subscription information from a unified data repository (unified data repository, UDR) and providing the subscription information to another network element (for example, an AMF); generate an authentication credential of the 3rd generation partnership project (3rd generation partnership project, 3GPP) for a terminal device; register and maintain a network element that currently serves the terminal device, for example, an AMF (namely, a serving AMF) that currently serves the terminal device; and be responsible for notifying a corresponding network element when subscription data is modified.

A network exposure function (network exposure function, NEF) exposes a service and a capability of a 3GPP network function to an application function (application function, AF), and may also enable the AF to provide information for the 3GPP network function.

An AF interacts with a core network element to provide some services, for example, interacts with a PCF to perform service policy control, interacts with an NEF to obtain some network capability information or provide some application information for a network, and provides some data network access point information for the PCF to generate routing information of a corresponding data service.

An authentication server function (authentication server function, AUSF) is configured to perform security authentication on a terminal device when the terminal device accesses a network.

A network slice selection function (network slice selection function, NSSF) selects a slice instance set for a terminal device, and determines an AMF set and allowed NSSAI for the terminal device.

A PCF provides configuration policy information for a terminal device, provides policy information for managing and controlling the terminal device for a control plane network element (for example, an AMF or an SMF) of a network, and generates a terminal device access policy and a QoS flow control policy.

A TSCTSF is mainly configured to receive a time sensitive communication (time sensitive communication, TSC)-related requirement of an AF, perform QoS requirement mapping, perform related session configuration by using a PCF, and directly perform operations such as TSC-related parameter configuration and reporting with a DS-TT and an NW-TT based on a port management message container (port management information container, PMIC) message and a network bridge management message container (user plane node management information container, UMIC) message.

In embodiments of this application, the terminal device is connected to the RAN device in a wireless manner, and the RAN network element is connected to a 5GC device in a wireless or wired manner. The 5GC device and the RAN network element may be different independent physical devices, or functions of the 5GC device and logical functions of the RAN network element may be integrated into a same physical device, or a part of the functions of the 5GC device and a part of the functions of the RAN network element may be integrated into one physical device. The terminal device may be located at a fixed position, or may be mobile.

The 5GC device mainly includes the AMF network element, the SMF network element, the UPF network element, and the like.

Names of network elements included in FIG. 1 are merely names, and the names do not constitute a limitation on functions of the network elements. In the 5G network and another future network, the network elements may alternatively have other names. This is not specifically limited in embodiments of this application. For example, in a 6G network, a part or all of the network elements may still use terms in 5G, or may have other names. This is uniformly described herein, and details are not described again below.

The network elements in FIG. 1 do not necessarily exist simultaneously, and which network elements are needed may be determined based on a requirement. Connection relationships between the network elements in FIG. 1 are not uniquely determined, and may be adjusted based on a requirement.

It may be understood that the foregoing network elements or functions may be network elements in a hardware device, may be software functions running on dedicated hardware, or may be virtualized functions instantiated on a platform (for example, a cloud platform).

A DetNet is a technology that helps enable a best-effort IP network to be on-time, accurate, and fast, and control and reduce end-to-end latency. In other words, the DetNet provides a capability of deterministic service guarantee for a carried service in a network domain. Therefore, the DetNet may be applied to scenarios that have high requirements on latency, such as industrial control, telemedicine, and online gaming.

The DetNet is a characteristic provided by a network. An IP network with the DetNet characteristic may be implemented by enhancing a processing function of a bridge routing node, and has the following basic characteristics.

Time synchronization: Most DetNet applications need timely synchronization of a terminal station. Therefore, a network device and the terminal device each may synchronize precision of an internal clock to be of 1 $\mu$s to 10 ns by using an IEEE 1588 precision time protocol.

Zero congestion loss: A congestion loss is a statistical overflow of an output buffer in a network node, and is a main cause of a packet loss in a best-effort network. Transmission of a data packet is adjusted and sufficient buffer space is allocated to a critical flow (critical flow), so that congestion can be eliminated.

Ultra-reliable data packet delivery: The DetNet may send a plurality of copies of a sequence data flow through a plurality of paths and eliminate a copy that is at or near a destination. Therefore, a single random event or a single device failure does not cause any data packet to be lost.

Coexistence with a best-effort service: The DetNet may adjust a speed of the critical flow to achieve the coexistence with the best-effort service, so that most traffic on the entire network is best-effort.

FIG. 2 is an example of a DetNet protocol architecture applicable to an embodiment of this application.

A DetNet includes a plurality of DetNet nodes, and the plurality of DetNet nodes include DetNet endpoints and DetNet intermediate nodes.

The DetNet endpoints are an initiating node and a receiving node in a DetNet flow, to be specific, may convert a common application data flow into a DetNet flow dedicated to the DetNet. The DetNet endpoints include an application layer, a service layer, and a forwarding layer.

For example, the DetNet endpoint is the initiating node. The application layer is configured to: receive a data flow delivered by an application, and forward the data flow to the service layer.

After receiving the data flow, the service layer is for mapping the data flow to a DetNet flow, generating some requirement information for the DetNet flow, and sending the DetNet flow and the requirement information to the forwarding layer together.

After receiving the DetNet flow, the forwarding layer is for adjusting computing resources and sending the DetNet flow to a neighbor DetNet intermediate node through a connected network cable or subnet.

After receiving the DetNet flow, the DetNet intermediate node may process the DetNet flow via a service layer based on configuration information that is of the DetNet flow and that is delivered by a DetNet controller, send a processed DetNet flow to a next neighbor DetNet intermediate node via a forwarding layer. The rest can be deduced by analogy until a DetNet flow is sent, via a forwarding layer, to a DetNet endpoint serving as the receiving node. The DetNet flow processed by a plurality of nodes is mapped, at a service layer, to a common application data flow, and the data flow is uploaded to an application layer, to implement end-to-end transmission of application data.

In the foregoing process, the DetNet intermediate node further needs to report capability information of the intermediate node to the DetNet controller, and the DetNet controller can deliver the corresponding configuration information of the DetNet flow for the DetNet flow, so that each intermediate node can perform specified processing on the DetNet flow.

In a 5G system, that the foregoing DetNet controller in a DetNet protocol collects node information from a node and delivers the configuration information to the node may be implemented in a related mechanism of an existing TSC protocol. In the existing TSC protocol, a TSC controller collects the information from the node and delivers the configuration requirement information to the node by using port addresses of a DS-TT and an NW-TT.

It can be learned that an existing processing mechanism of reporting DetNet node information and configuring a DetNet requirement is not directly implemented in a mechanism of the DetNet protocol. In comparison with the related mechanism of the TSC protocol, in the DetNet protocol, collecting identification information of a neighbor node is currently further needed, and a specific port or MAC address is not specified when the DetNet controller delivers a requirement configuration, while only an identifier is for specifying configuration information of a DetNet flow of a related DetNet node. In addition, currently, the configuration information that is of the DetNet flow and that is delivered by the DetNet controller is processed at a DetNet flow granularity, rather than at a DetNet node granularity. When configuration information at a flow granularity is delivered to a DetNet node, the node needs to negotiate with another node that has a topological relationship with the node, to determine a specific requirement configuration corresponding to each node. However, this negotiation process is not proposed in the existing processing mechanism.

In view of this, an embodiment of this application provides a communication method. Based on a concept of a DetNet node, DetNet node information is directly reported to a DetNet controller, and configuration information that is of a DetNet flow and that is directly sent by the DetNet controller for the DetNet flow in which a DetNet node is located is received, and the node information and the configuration information of the DetNet flow in the mechanism are compatible with an existing 5GC network, so that the 5GC can adjust a session corresponding to a UE, and further deterministically transmit the DetNet flow through the session of the specified UE.

FIG. 3 is an example of another communication system architecture applicable to an embodiment of this application.

A communication system has two architectures. An architecture of a first communication system includes a UE, a 5GC, and a DetNet controller. The 5GC communicates with the DetNet controller via a TSCTSF network element. However, to cause the TSCTSF network element to adapt to a DetNet protocol, corresponding modification or adjustment needs to be performed on a data information processing mechanism for the TSCTSF network element.

In view of this, an embodiment of this application further provides an architecture of a second communication system. The architecture includes a UE, a 5GC, a DetNet AF network element, and a DetNet controller. The 5GC communicates with the DetNet AF network element via a TSCTSF network element. Further, the DetNet AF network element communicates with the DetNet controller. It should be understood that the DetNet AF is an intermediate apparatus provided in this embodiment of this application, and is specially configured to communicate with the DetNet controller, to avoid the corresponding modification or adjustment on a data information processing mechanism for the existing TSCTSF network element.

In the communication system architecture shown in FIG. 3, the UE may be considered as a DetNet endpoint in the DetNet protocol architecture shown in FIG. 2, and the UE performs transmission of a DetNet flow with another DetNet endpoint. The another DetNet endpoint may be a network device (for example, a server in a DetNet network), or may be another UE. The 5GC may be considered as an intermediate node in the DetNet protocol architecture, in other words, the 5GC is a node that is between the UE and the another DetNet endpoint and that is for transmission of the DetNet flow.

The DetNet flow may be directly transmitted between the 5GC and the UE, in other words, there is no other intermediate node between the 5GC and the UE. Alternatively, there may be one or more intermediate nodes that are between the 5GC and the UE and that are configured to transmit the DetNet flow. Similarly, there may be no other intermediate node between the 5GC and the another DetNet endpoint, or there may be one or more intermediate nodes configured to transmit the DetNet flow.

Based on the first communication system in the communication system architecture 300, an embodiment of this application provides a communication method, to implement a function in which a 5GC can report DetNet node information to a DetNet controller, and adjust, based on configuration information that is of a DetNet flow and that is delivered by the DetNet controller, a session corresponding to a UE.

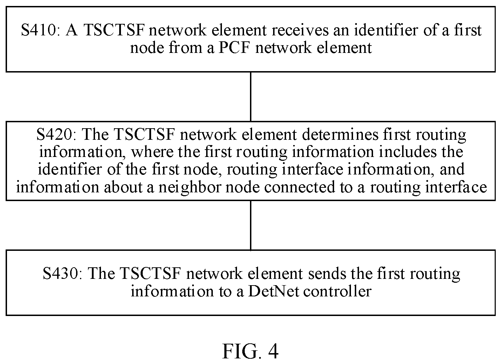

FIG. 4 is a schematic flowchart of a communication method according to an embodiment of this application.

S410: A TSCTSF network element receives an identifier of a first node from a PCF network element.

In some possible embodiments, the first node is configured to adjust a session corresponding to a UE, to deterministically transmit a DetNet flow through the session of the specified UE. The first node includes a UPF network element and the UE, and the first node is a node in the DetNet flow mentioned in the foregoing embodiment, and may further be an intermediate node in the DetNet flow.

In some possible embodiments, the identifier of the first node may be generated by an SMF network element, and the first node may be an identifier of the UE, or may be an identifier of the UPF that establishes the session with the UE. It should be understood that the SMF can obtain the identifier of the UE and the identifier of the UPF when receiving a session establishment request of the UE.

In some possible embodiments, the identifier of the UE is an IP address or a generic public subscription identifier GPSI of the UE, and the identifier of the UPF network element is an IP address or a name of the UPF network element.

In some possible embodiments, the session request may include: a DNN, S-NSSAI, and DetNet indication information. The DetNet indication information may be for communicating the DetNet flow through the session corresponding to the UE. For example, the session request may be in the following form: a session request (the DNN, the S-NSSAI, a DetNet indication).

S420: The TSCTSF network element determines first routing information, where the first routing information includes the identifier of the first node, routing interface information, and information about a neighbor node connected to a routing interface.

It should be understood that the first routing information represents routing information of the first node.

In some possible embodiments, the TSCTSF network element may receive UE-side routing information sent by the UE or a DS-TT, where the UE-side routing information includes the identifier of the first node, routing interface information of the UE, and information about a neighbor node connected to a routing interface of the UE. The TSCTSF network element may further receive UPF network element-side routing information sent by the UPF network element or an NW-TT, where the UPF network element-side routing information includes the identifier of the first node, routing interface information of the UPF network element, and information about a neighbor node connected to a routing interface of the UPF network element. The TSCTSF network element determines the first routing information based on the UE-side routing information and the UPF network element-side routing information.

In some possible embodiments, the TSCTSF network element may receive UPF network element-side routing information sent by the UPF network element or an NW-TT, where the UPF network element-side routing information includes the identifier of the first node, routing interface information of the UPF network element, and information about a neighbor node connected to a routing interface of the UPF network element; and UE-side routing information collected and forwarded by the UPF network element or the NW-TT, where the UE-side routing information includes the identifier of the first node, routing interface information of the UE, and information about a neighbor node connected to a routing interface of the UE. The TSCTSF network element determines the first routing information based on the UE-side routing information and the UPF network element-side routing information.

In some possible embodiments, if the TSCTSF network element receives the UE-side routing information via the DS-TT, the TSCTSF network element may obtain the UE-side routing information based on a PMIC message; or if the TSCTSF network element receives the UPF network element-side routing information via the NW-TT, the TSCTSF network element may obtain the UPF network element-side routing information based on a UMIC message.

In some possible embodiments, the first routing information may be a combination of the UE-side routing information and the UPF network element-side routing information.

S430: The TSCTSF network element sends the first routing information to a DetNet controller.

Based on the foregoing technical solution, the TSCTSF network element determines the first routing information that uses the first node as an object, and reports the first routing information of the first node to the DetNet controller, so that a function of reporting node information to the DetNet controller based on a DetNet protocol is implemented.

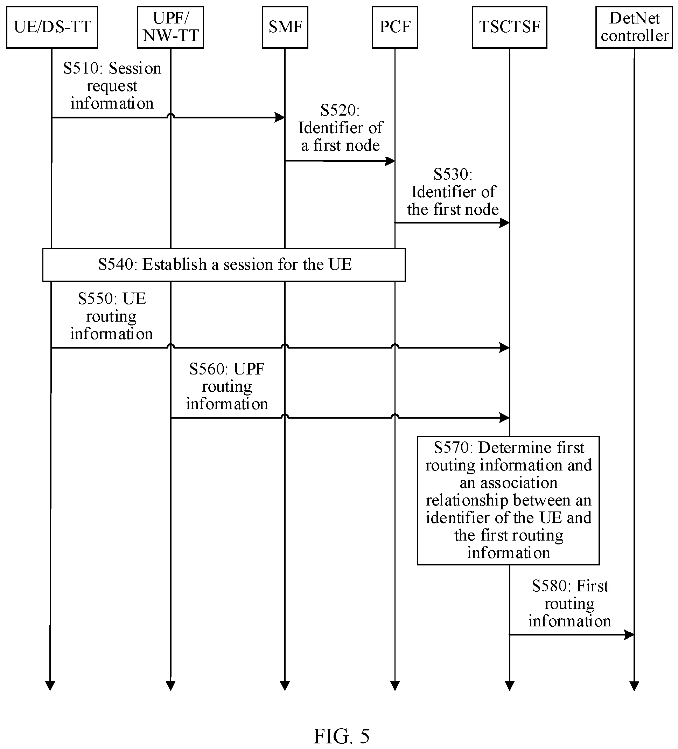

For ease of understanding, with reference to FIG. 5, the following describes in detail a specific data exchange process between network elements in a communication method provided in embodiments of this application.

FIG. 5 is a diagram of data exchange of a communication method according to an embodiment of this application.

S510: A UE sends session request information to an SMF network element, where the session request information is for requesting the SMF network element to establish a session for the UE, and indicates that the session is for communicating a DetNet data flow.

It should be understood that the foregoing session adjustment may be adjusting the session to a time sensitive session, so that the DetNet flow is transmitted through the session corresponding to the UE. The time sensitive session is implemented based on configuration of the DetNet flow corresponding to a DetNet node to which the UE and a UPF belongs.

In some possible embodiments, the request information may be used by the UE or a DS-TT connected to the UE to determine, based on a current application scenario, that a session needs to be established for transmission of the DetNet flow. Because the session request information is for requesting the SMF to establish the session of the UE for the UE, the request information further includes an identifier of the UE. In addition, the request information may further carry a PMIC message of the DS-TT, so that the SMF may learn, based on the PMIC message, that the session is a TSC or TSN session, in other words, the session may be for transmission of the DetNet flow.

S520: The SMF network element generates an identifier of a first node based on the session request information, and sends the identifier of the first node to a PCF.

It can be learned from the foregoing embodiment that the identifier of the first node may be the identifier of the UE, or may be an identifier of the UPF that establishes a session with the UE.

S530: The PCF forwards the identifier of the first node to a TSCTSF network element.

S540: The SMF network element first establishes the session of the UE.

In some possible embodiments, when establishing the session, the SMF may also deliver the identifier of the first node to the UE and the UPF network element.

S550: The UE or the DS-TT connected to the UE sends UE-side routing information to the TSCTSF network element.

In some possible embodiments, the UE-side routing information may include the identifier of the first node, routing interface information of the UE, and information about a neighbor node connected to a routing interface of the UE. The UE-side routing information may be reported to the TSCTSF network element in a form of a DetNet information report, and may be specifically in the following form:

a DetNet information report (the identifier of the first node, the routing interface information of the UE, and the information about the neighbor node connected to the routing interface of the UE).

In some possible embodiments, after receiving the identifier of the first node, the UE may send the identifier of the first node to the DS-TT connected to the UE, so that the DS-TT may also replace the UE to send the UE-side routing information to the TSCTSF network element.

In some possible embodiments, the routing interface information of the UE may include IP address information of the UE and an IP address or port information of the DS-TT.

S560: The UPF network element or an NW-TT connected to the UPF network element sends UPF network element-side routing information to the TSCTSF network element.

In some possible embodiments, the UPF network element-side routing information may include the identifier of the first node, routing interface information of the UPF network element, and information about a neighbor node connected to a routing interface of the UPF network element. The UPF network element-side routing information may also be reported to the TSCTSF network element in a form of a DetNet information report, and may be specifically in the following form:

a DetNet information report (the identifier of the first node, the routing interface information of the UPF network element, and the information about the neighbor node connected to the routing interface of the UPF network element).

In some possible embodiments, after receiving the identifier of the first node, the UPF network element may send the identifier of the first node to the NW-TT connected to the UPF network element, so that the NW-TT may also replace the UPF network element to send the UPF network element-side routing information to the TSCTSF network element.

In some possible embodiments, the UPF network element or the NW-TT may obtain routing information of the UE or routing information of the DS-TT on a user plane. The routing information also includes the corresponding UE-side routing interface information and UE-side neighbor node information or the corresponding UPF network element-side routing interface information and UPF network element-side neighbor node information, so that the UPF network element or the NW-TT may report both the UE-side routing information and the UPF network element-side routing information.

In some possible embodiments, the UPF network element-side routing interface information may include an IP address or port information of the NW-TT.

In some possible embodiments, the UE-side routing information or the UPF network element-side routing information may alternatively be directly reported to the TSCTSF network element.

S570: The TSCTSF network element determines first routing information and an association relationship between the identifier of the UE and the first routing information.

It should be understood that, that the TSCTSF network element determines the association relationship between the identifier of the UE and the first routing information is mainly used by the TSCTSF network element to subsequently determine, based on first configuration information delivered by a DetNet controller, an identifier that is of a UE and that corresponds to the configuration information. The first configuration information specifies only identification information of a node, but the PCF network element and the SMF network element cannot determine, based on the identification information of the node, which UE has a session that the first configuration information is for. The first configuration information includes routing information of the node, and the first routing information is also the routing information for the node. Therefore, in this embodiment of this application, it is proposed that the TSCTSF network element needs to first determine the association relationship between the identifier of the UE and the first routing information, and the SMF network element and the PCF network element can identify the identifier of the UE, so that the SMF or the PCF can subsequently determine the session that is between the UE and the UPF network element and that the configuration information is for. For details about specific delivery of the first configuration information and a corresponding processing procedure, refer to descriptions of subsequent specific embodiments.

S580: The TSCTSF network element sends the first routing information to the DetNet controller.

Based on the foregoing technical solution, a function of reporting node information to the DetNet controller based on a DetNet protocol is implemented.

It should be understood that the foregoing steps are merely example steps, and a sequence of the steps may be properly adjusted in different cases. The sequence of the specific steps is not limited in this embodiment of this application.

The foregoing embodiment merely provides a method procedure of how to send the first routing information of the first node to the DetNet controller by using the node as an object. The DetNet controller further delivers first requirement information for the first node. However, it can be learned from the related descriptions in the foregoing embodiment that a network element in a 5GC cannot directly identify the first requirement information. In view of this, an embodiment of this application provides another communication method. According to the method, a function of adjusting, based on the first configuration information delivered by the DetNet controller, the session corresponding to the UE can be implemented, so that the DetNet flow is deterministically transmitted through the session of the specified UE.

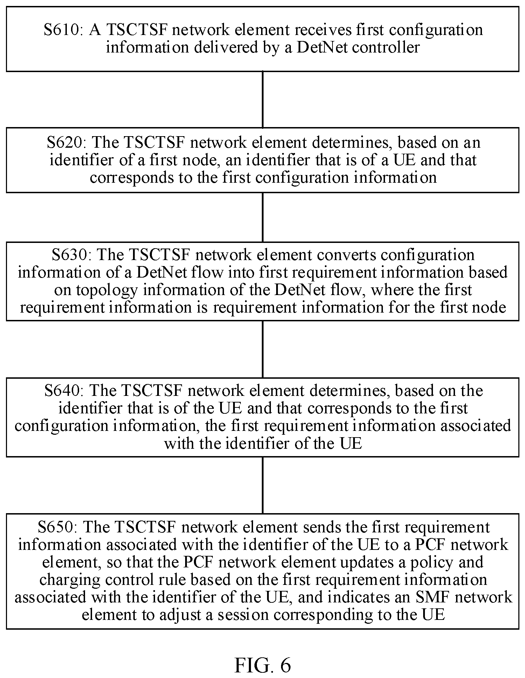

FIG. 6 is a flowchart of another communication method according to an embodiment of this application. It may be understood that the method may be applied to the communication system architecture shown in FIG. 3.

S610: A TSCTSF network element receives first configuration information delivered by a DetNet controller.

In some possible embodiments, the first requirement information may include an identifier of a first node, configuration information of a DetNet flow, and information about the first node, for example, next-hop information of the first node.

The DetNet flow is a flow between a UE and a second node, to be specific, the UE and the second node are respectively two DetNet endpoints in the DetNet protocol architecture shown in FIG. 2. The second node may be a network device (for example, a server in a DetNet network), or may be another UE (a second UE). The first node is a node that is between the UE and the second node and that is for transmission of the flow, in other words, the first node is an intermediate node in the DetNet protocol architecture shown in FIG. 2. For example, the first node may be the 5GC in the communication system architecture shown in FIG. 3.

It should be understood that the configuration information of the DetNet flow is configuration parameter information for specifically configuring the DetNet flow. For example, the configuration information of the DetNet flow may include a parameter for configuring the flow.

In addition, the information about the first node, for example, the next-hop information of the first node, may include incoming interface information, outgoing interface information, and neighbor node information that are of the first node. The neighbor node information may be information about a neighbor node connected to an outgoing interface, or the neighbor node information may be information about a neighbor node connected to the first node. The incoming interface information, the outgoing interface information, and the information about the neighbor node connected to the outgoing interface that are of the first node vary with a transmission direction (uplink or downlink) of a data flow in a session corresponding to the UE. It should be noted that the session corresponding to the UE is for transmitting the DetNet flow, and the transmission direction of the data flow in the session corresponding to the UE is a transmission direction of the DetNet flow.

For example, when the second node is the network device, and the DetNet flow is an uplink flow between the UE and the network device, the incoming interface information of the first node may indicate a port through which the DetNet flow passes when the DetNet flow is input into the first node, the outgoing interface information of the first node indicates a port through which the DetNet flow passes when the DetNet flow is output from the first node, and the neighbor node information indicates a node connected to the port through which the flow passes when the flow is output from the first node.

The incoming interface information may correspond to routing interface information of the terminal device. For example, the incoming interface information is generated based on the routing interface information of the terminal device. For another example, the incoming interface information corresponds to routing interface information of a third node. For example, the incoming interface information is generated based on the routing interface information of the third node, and the third node is a node that is between the terminal device and the first node and that is for transmission of the DetNet flow.

The outgoing interface information may correspond to routing interface information of a user plane network element corresponding to the session of the terminal device. For example, the incoming interface information is generated based on the routing interface information of the user plane network element. For another example, the outgoing interface information corresponds to routing interface information of a fourth node. For example, the incoming interface information is generated based on the routing interface information of the fourth node, and the fourth node is a node that is between the first node and a user plane network element and that is for transmission of the DetNet flow.

The neighbor node information may correspond to information about a node adjacent to a routing interface of the user plane network element.

For example, when the second node is the network device, and the DetNet flow is a downlink flow transmitted from the network device to the UE, the incoming interface information of the first node may indicate a port through which the DetNet flow passes when the DetNet flow is input into the first node, and the outgoing interface information of the first node indicates a port through which the DetNet flow passes when the DetNet flow is output from the first node.

The incoming interface information may correspond to routing interface information of a user plane network element corresponding to the session of the terminal device. For example, the incoming interface information of the first node is generated based on the routing interface information of the user plane network element. For another example, the incoming interface information of the first node corresponds to routing interface information of a third node. For example, the incoming interface information of the first node is generated based on the routing interface information of the third node, and the third node is a node that is between the first node and a user plane network element and that is for transmission of the DetNet flow.

The outgoing interface information may correspond to routing interface information of the terminal device. For example, the incoming interface information of the first node is generated based on the routing interface information of the terminal device. For another example, the outgoing interface information of the first node corresponds to routing interface information of a fourth node. For example, the incoming interface information of the first node is generated based on the routing interface information of the fourth node, and the fourth node is a node that is between the first node and the terminal device and that is for transmission of the DetNet flow.

The neighbor node information may correspond to information about a node adjacent to a routing interface of the terminal device. For example, when the transmission direction of the data flow in the session is uplink, the incoming interface information of the first node is corresponding to the routing interface information of the UE, where for example, the incoming interface information of the first node is generated based on the routing interface information of the UE; the outgoing interface information is corresponding to the routing interface information of the UPF network element, where for example, the outgoing interface information of the first node is generated based on the routing interface information of the UPF network element; and the neighbor node information, for example, the information about the neighbor node connected to the outgoing interface, is corresponding to the information about the neighbor node connected to the routing interface of the UPF network element. Similarly, when the transmission direction of the data flow in the session is downlink, the incoming interface information of the first node is corresponding to the routing interface information of the UPF, where for example, the incoming interface information of the first node is generated based on the routing interface information of the UPF network element; the outgoing interface information is corresponding to the routing interface information of the UE, where for example, the outgoing interface information of the first node is generated based on the routing interface information of the UPF network element; and the neighbor node information, for example, the information about the neighbor node connected to the outgoing interface, is corresponding to the information about the neighbor node connected to the routing interface of the UE.

S620: The TSCTSF network element determines, based on the identifier of the first node, an identifier that is of the UE and that corresponds to the first configuration information.

In some possible embodiments, an SMF network element cannot configure the session between the specified UE and the UPF network element based on the identifier of the first node. However, the TSCTSF network element has previously determined an association relationship between the identifier of the UE and first routing information, the first routing information includes the identifier of the first node, and the first configuration information delivered by the DetNet controller also includes the identifier of the first node. Therefore, the TSCTSF determines, by identifying specific content of the identifier of the first node, that the identifier of the first node corresponds to the identifier of the UE, to determine, in this manner, that the first configuration information is configured for the session corresponding to the UE.

In some possible embodiments, the first configuration information further includes topology information of the DetNet flow.

S630: The TSCTSF network element converts the configuration information of the DetNet flow into first requirement information based on the topology information of the DetNet flow, where the first requirement information is requirement information for the first node.

It should be understood that, after determining that the first configuration information is configured for the session corresponding to the UE, a PCF network element cannot directly identify the first configuration information, cannot update a control policy and charging rule, and therefore cannot indicate the SMF network element to configure the session corresponding to the UE. Therefore, the TSCTSF network element needs to convert the first configuration information into the first requirement information that can be identified by the PCF network element.

In some possible embodiments, the configuration information of the DetNet flow is requirement information at a flow granularity, and the TSCTSF network element may determine a quantity of nodes in the DetNet flow based on the topology information of the DetNet flow. The TSCTSF network element converts the configuration information of the DetNet flow into the first requirement information based on the quantity of nodes in the DetNet flow. It should be understood that the first requirement information is requirement information at a node granularity, and further, is requirement information for the first node.

In some possible embodiments, the TSCTSF network element prestores a mapping relationship between a configuration parameter in the configuration information of the DetNet flow and a requirement parameter in the first requirement information. In most cases, only specific parameter names are replaced between the configuration parameter and the requirement parameter, in other words, some configuration parameter values are in one-to-one correspondence with requirement parameter values. However, some configuration parameter values can be mapped to requirement parameter values only after some calculation processing is performed.

S640: The TSCTSF network element determines, based on the identifier that is of the UE and that corresponds to the first configuration information, the first requirement information associated with the identifier of the UE. Optionally, the first requirement information is for adjusting the session of the UE.

S650: The TSCTSF network element sends the first requirement information associated with the identifier of the UE to the PCF network element, so that the PCF network element adjusts the session of the UE. For example, the PCF network element updates the policy and charging control rule based on the first requirement information associated with the identifier of the UE, and indicates the SMF network element to adjust the session corresponding to the UE.

For example, the TSCTSF network element sends a message, for example, a policy authorization establishment request message or a policy authorization update request message, to the PCF network element, where the message includes the first requirement information and the identifier of the UE.

In some possible embodiments, after the PCF network element updates the policy and charging control rule, the SMF may configure, by adjusting QoS, the session corresponding to the UE as a time sensitive session, so that the DetNet flow is transmitted through the session corresponding to the UE.

Based on the foregoing technical solution, the TSCTSF network element converts the first configuration information associated with the identifier of the first node into the first requirement information that is associated with the identifier of the UE and that can be identified by the PCF network element or the like, so that the SMF network element can adjust the session corresponding to the UE, and the DetNet flow is further deterministically transmitted through the session of the specified UE. In other words, based on the DetNet protocol, DetNet configuration in which the node is used as an object is implemented, and the requirement information for the DetNet flow is converted into the requirement information for the DetNet node.

In some possible embodiments, in addition to the UE and the UPF network element, the first node may further include one or more of the TSCTSF network element, the PCF network element, and the SMF network element mentioned above.

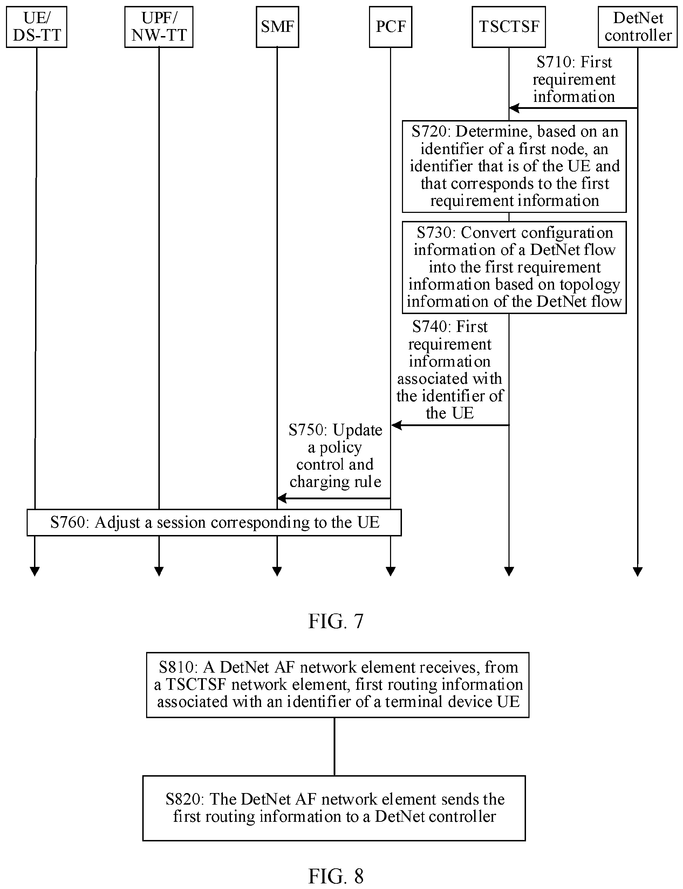

For ease of understanding, with reference to FIG. 7, the following describes in detail a specific data exchange process between network elements in another communication method provided in embodiments of this application.

FIG. 7 is a diagram of data exchange of another communication method according to an embodiment of this application. The method may be applied to the communication system architecture shown in FIG. 3.

S710: A TSCTSF network element receives information, for example, requirement information, from a DetNet controller.

It can be learned from the foregoing embodiment that the information, for example, the requirement information, may be the foregoing first configuration information, for example, may include an identifier of a first node, requirement information of a DetNet flow (which may also be referred to as configuration information of the DetNet flow), information about the first node (for example, next-hop information of the first node), and topology information of the DetNet flow.

The DetNet flow is a flow between a UE and a second node, to be specific, the UE and the second node are respectively two DetNet endpoints in the DetNet protocol architecture shown in FIG. 2. The second node may be a network device (for example, a server in a DetNet network), or may be another UE (a second UE). The first node is a node that is between the UE and the second node and that is for transmission of the flow, in other words, the first node is an intermediate node in the DetNet protocol architecture shown in FIG. 2. For example, the first node may be the 5GC in the communication system architecture shown in FIG. 3.

It should be understood that the configuration information of the DetNet flow is configuration parameter information for specifically configuring the DetNet flow. For example, the configuration information of the DetNet flow includes a parameter for configuring the flow.

The information about the first node, for example, the next-hop information of the first node, may include incoming interface information, outgoing interface information, and information about a neighbor node connected to an outgoing interface that are of the first node. For examples of the incoming interface information, the outgoing interface information, and the information about the neighbor node connected to the outgoing interface, refer to step S610. Details are not described herein again.

S720: The TSCTSF network element determines, based on the identifier of the first node, an identifier that is of the UE and that corresponds to the information, for example, the requirement information.

In some possible embodiments, if the TSCTSF network element determines, by identifying the identifier that is of the first node and that is included in the first configuration information, that the identifier of the first node is the identifier of the UE, the TSCTSF network element may directly determine the identifier that is of the UE and that corresponds to the information, for example, the requirement information.

In some possible embodiments, if the TSCTSF network element determines, by identifying the identifier that is of the first node and that is included in the first configuration information, that the identifier of the first node is an identifier of a UPF network element, the TSCTSF network element needs to determine, based on the next-hop information of the first node and topology information of the first node in the information, for example, the requirement information, the identifier that is of the UE and that corresponds to the information, for example, the requirement information.

It should be understood that the UPF may establish sessions with a plurality of UEs. Therefore, which UE has a session that is to the UPF network element and that the information, for example, the requirement information, is for cannot be determined based on only the identifier of the UPF network element. Therefore, even if it is determined that the identifier of the first node is the identifier of the UPF network element, the identifier that is of the UE and that corresponds to the information, for example, the requirement information, also needs to be determined.

In some possible embodiments, a process in which the TSCTSF network element determines, based on the next-hop information of the first node and the topology information of the first node in the information, for example, the requirement information, the identifier that is of the UE and that corresponds to the information, for example, the requirement information, may be as follows:
The TSCTSF network element matches the information about the first node, for example, the next-hop information of the first node, with first routing information. When the incoming interface information, the outgoing interface information, and neighbor node information (for example, the information about the neighbor node connected to the outgoing interface) respectively correspond to routing interface information of the UE, routing interface information of the UPF network element, and neighbor node information of the UPF network element (for example, information about a neighbor node connected to a routing interface of the UPF network element), for example, when the incoming interface information, the outgoing interface information, and the information about the neighbor node connected to the outgoing interface respectively belong to the routing interface information of the UE, the routing interface information of the UPF network element, and the information about the neighbor node connected to the routing interface of the UPF network element; or when the incoming interface information, the outgoing interface information, and neighbor node information (for example, the information about the neighbor node connected to the outgoing interface) respectively correspond to routing interface information of the UPF network element, routing interface information of the UE, and neighbor node information of the UE (for example, information about a neighbor node connected to a routing interface of the UE), for example, when the incoming interface information, the outgoing interface information, and the information about the neighbor node connected to the outgoing interface respectively belong to the routing interface information of the UPF network element, the routing interface information of the UE, and the information about the neighbor node connected to the routing interface of the UE, it represents that the information about the first node, for example, the next-hop information of the first node successfully matches the first routing information. The TSCTSF network element has previously determined an association relationship between the identifier of the UE and the first routing information, for example, the first routing information includes the identifier of the UE, and the information, for example, the requirement information, is for the first node. Therefore, the TSCTSF network element can determine, through such an information matching process, the identifier that is of the UE and that corresponds to the information, for example, the requirement information.

For example, the TSCTSF network element receives the first routing information, where the first routing information includes a second identifier and routing interface information. That the TSCTSF network element determines the identifier of the terminal device based on the information that is about the first node and that is in the requirement information, for example, the next-hop information of the first node, includes: The TSCTSF network element determines the second identifier as the identifier of the terminal device when the information about the first node matches the routing interface information.

When the second node is the network device, and the DetNet flow is an uplink flow between the terminal device and the network device, the routing interface information includes the routing interface information of the terminal device corresponding to the second identifier, the routing interface information of the UPF network element, and the neighbor node information of the UPF network element. The TSCTSF network element may determine, when the following conditions are met, that the information about the first node matches the routing interface information:

(1) The incoming interface information corresponds to the routing interface information of the terminal device corresponding to the second identifier.
(2) The outgoing interface information corresponds to the routing interface information of the UPF network element.
(3) The neighbor node information corresponds to the neighbor node information of the UPF network element.

In this case, that the TSCTSF network element receives the first routing information may be: The TSCTSF network element receives, from the terminal device corresponding to the second identifier, the second identifier and the routing interface information of the terminal device corresponding to the second identifier, and receives the routing interface information of the UPF network element and the neighbor node information of the UPF network element from the UPF network element.

When the second node is the network device, and the DetNet flow is a downlink flow between the terminal device and the network device, the routing interface information includes the routing interface information of the terminal device corresponding to the second identifier, the routing interface information of the UPF network element, and the neighbor node information of the UPF network element. Routing interface information of the network element, and neighbor node information that is of the terminal device and that corresponds to the second identifier. The TSCTSF network element may determine, when the following conditions are met, that the information about the first node matches the routing interface information:

(1) The incoming interface information corresponds to the routing interface information of the UPF network element.
(2) The outgoing interface information corresponds to the routing interface information of the terminal device corresponding to the second identifier.
(3) The neighbor node information corresponds to the neighbor node information of the terminal device corresponding to the second identifier.

In this case, that the TSCTSF network element receives the first routing information may be: The TSCTSF network element receives, from the terminal device corresponding to the second identifier, the second identifier, the routing interface information of the terminal device corresponding to the second identifier, and the neighbor node information of the terminal device corresponding to the second identifier, and receives the routing interface information of the UPF network element from the UPF network element.

Optionally, the TSCTSF network element may alternatively receive the first routing information from the UPF network element. In some possible embodiments, there may be a plurality of neighbor nodes connected to the routing interface of the UE, in other words, the neighbor node information may be integrated into a neighbor node list of the UE. The TSCTSF network element may alternatively match only the information about the neighbor node connected to the outgoing interface in the next-hop information of the first node with the neighbor node list of the UE. If the information about the neighbor node connected to the outgoing interface in the next-hop information successfully matches a node in the node list of the UE, it indicates that the DetNet flow is downlink data, and the TSCTSF network element can determine the identifier that is of the UE and that corresponds to the information, for example, the requirement information.

Similarly, there may also be a plurality of neighbor nodes connected to the routing interface of the UPF network element, in other words, the neighbor node information may be integrated into a neighbor node list of the UPF network element. The TSCTSF network element may alternatively match only the information about the neighbor node connected to the outgoing interface in the next-hop information of the first node with the neighbor node list of the UPF network element. If the information about the neighbor node connected to the outgoing interface in the next-hop information successfully matches a node in the neighbor node list of the UPF network element, it indicates that the DetNet flow is uplink data. In addition, the identifier that is of the UE and that corresponds to the information, for example, the requirement information, needs to be determined through the foregoing routing interface information matching process, and the routing interface information of the UE and the routing interface information of the UPF network element may also separately correspond to a plurality of routing interfaces. Similarly, provided that the incoming interface information and the outgoing interface information in the next-hop information respectively belong to the routing interface information of the UE and the routing interface information of the UPF network element, the matching succeeds, and the identifier that is of the UE and that corresponds to the information, for example, the requirement information, can be further determined.

S730: The TSCTSF network element converts the configuration information of the DetNet flow into first requirement information based on the topology information of the DetNet flow, where the first requirement information is requirement information for the first node.

For example, the configuration information of the DetNet flow is a configuration of a latency requirement. For example, sending latency of a data packet in the DetNet flow needs to be within 60 ms. The topology information of the DetNet flow includes the first node, the second node, a third node, and a fourth node. The four nodes divide the DetNet flow into three segments. If all the four nodes are intermediate nodes, the TSCTSF network element may divide the latency requirement by 3, to determine the first requirement information, and use the first requirement information as a latency requirement of the first node. If the first node and the fourth node are respectively a receiving node and a sending node, and there are two intermediate nodes in total, the latency requirement needs to be divided by 2. In addition, a configuration parameter and a requirement parameter are different in specific representation forms. Therefore, corresponding conversion needs to be performed between the configuration parameter and the requirement parameter.

It can be learned from the related descriptions in the foregoing embodiment that the TSCTSF prestores a mapping relationship between the configuration parameter in the configuration information of the DetNet flow and the requirement parameter in the first requirement information, to convert the first configuration information into the first requirement information.

S740: The TSCTSF network element sends the first requirement information associated with the identifier of the UE to a PCF network element.

For example, the TSCTSF network element sends a message, for example, a policy authorization establishment request message or a policy authorization update request message, to the PCF network element, where the message includes the first requirement information and the identifier of the UE.

It should be understood that the identifier of the UE is determined by the TSCTSF network element based on the identifier of the first node, where the identifier of the first node is included in the first configuration information, and the first requirement information is determined by converting the information, for example, the requirement information, by the TSCTSF network element. Therefore, the TSCTSF can determine an association relationship between the identifier of the UE and the first requirement information, to send the first requirement information associated with the identifier of the UE to the PCF network element.

S750: The PCF network element updates a policy control and charging rule based on the first requirement information, and indicates an SMF to adjust a session corresponding to the UE.

S760: The SMF network element adjusts, based on the first requirement information, the session corresponding to the UE.

It should be understood that the adjustment of the session corresponding to the UE is to deterministically transmit the DetNet flow through the session of the specified UE.

Based on the foregoing technical solution, the TSCTSF network element converts the first configuration information associated with the identifier of the first node into the first requirement information that is associated with the identifier of the UE and that can be identified by the PCF network element or the like, so that the SMF network element can adjust the session corresponding to the UE, and the DetNet flow is further deterministically transmitted through the session of the specified UE. In other words, based on a DetNet protocol, DetNet configuration in which the node is used as an object is implemented, and the requirement information for the DetNet flow is converted into the requirement information for the DetNet node.

It can be learned from the related descriptions in the foregoing embodiment that, to cause the TSCTSF network element to adapt to the DetNet protocol, corresponding modification or adjustment needs to be performed on an existing data information processing mechanism for the TSCTSF network element, so that the TSCTSF network element can identify the identifier of the node and convert the first configuration information delivered by the DetNet controller. To avoid the corresponding modification or adjustment on the existing data processing mechanism for the TSCTSF network element, an embodiment of this application provides still another communication method. In the method, a DetNet AF network element is introduced, so that the DetNet AF network element completes work such as the identification of the identifier of the node and the conversion of the first configuration information delivered by the DetNet controller.

FIG. 8 is a schematic flowchart of a communication method according to an embodiment of this application.

S810: A DetNet AF network element receives, from a TSCTSF network element, first routing information associated with an identifier of a terminal device UE.

In some possible embodiments, before S810, the DetNet AF network element further needs to send first request information to the TSCTSF network element, where the first request information is for requesting the TSCTSF network element to send the stored first routing information associated with the identifier of the UE to the DetNet AF network element.

In some possible embodiments, the first routing information includes an identifier of a first node, routing interface information, and information about a neighbor node connected to a routing interface.

Similar to the embodiment corresponding to S410, the first node is also configured to adjust a session corresponding to the UE, to deterministically transmit a DetNet flow through the session of the specified UE. The first node includes a UPF network element and the UE, and the first node is the intermediate node in the DetNet flow mentioned in the foregoing embodiment.

It may be clearly understood by a person skilled in the art that, for the purpose of convenient and brief description, for a process of generating the identifier of the first node and a process of determining, by the TSCTSF network element, the first routing information and an association relationship between an IP of the UE and the first routing information, refer to the corresponding processes in the foregoing embodiments. Details are not described herein again.

In some possible embodiments, after determining the association relationship between the identifier of the UE and the first routing information, the TSCTSF network element may determine the first routing information associated with the IP of the UE, and further send the first routing information associated with the IP of the UE to the DetNet AF network element. The DetNet AF network element receives the first routing information associated with the IP of the UE, and may also determine the association relationship between the IP of the UE and the first routing information.

S820: The DetNet AF network element sends the first routing information to a DetNet controller.

It should be understood that the first routing information represents routing information of the first node.

In some possible embodiments, in addition to the UE and the UPF network element, the first node may further include one or more of the TSCTSF network element, the PCF network element, and the SMF network element mentioned above.

Based on the foregoing technical solution, the DetNet AF network element can determine the first routing information that uses the first node as an object, and report the first routing information of the first node to the DetNet controller, so that a function of reporting node information to the DetNet controller based on a DetNet protocol is implemented, and corresponding modification or adjustment on an existing data information processing mechanism for the TSCTSF network element to implement the function is avoided.

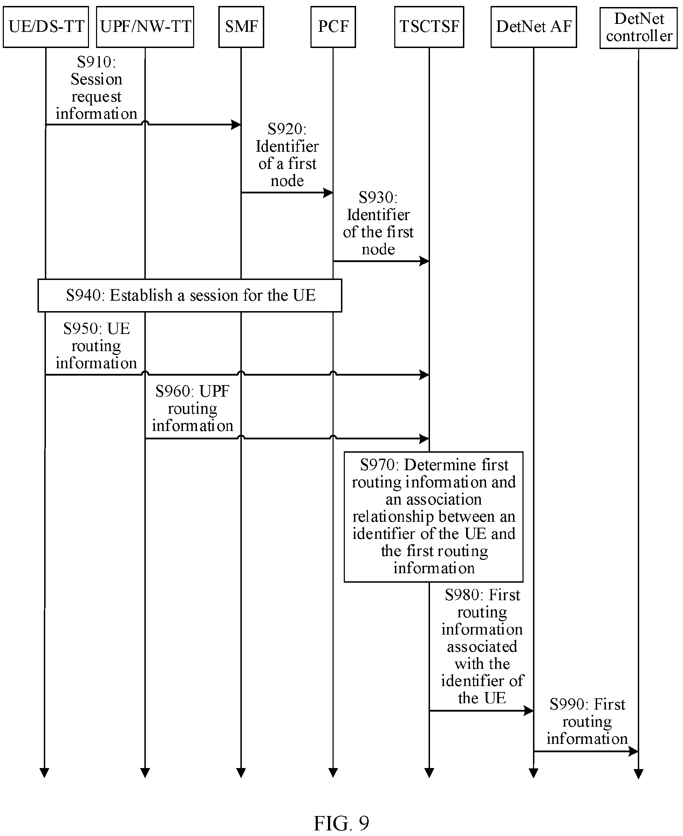

For ease of understanding, with reference to FIG. 9, the following describes in detail a specific data exchange process between network elements in a communication method provided in embodiments of this application.

FIG. 9 is a diagram of data exchange of still another communication method according to an embodiment of this application.

S910: A UE sends session request information to an SMF network element, where the session request information is for requesting the SMF network element to establish a session of the UE, for transmission of a DetNet flow through the session.

S920: The SMF network element generates an identifier of a first node based on the session request information, and sends the identifier of the first node to a PCF.

S930: The PCF forwards the identifier of the first node to a TSCTSF network element.

S940: The SMF network element first establishes a session of the UE.

S950: The UE or a DS-TT connected to the UE sends UE-side routing information to the TSCTSF network element.

S960: A UPF network element or an NW-TT connected to the UPF network element sends UPF network element-side routing information to the TSCTSF network element.

S970: The TSCTSF network element determines first routing information and an association relationship between the identifier of the UE and the first routing information.

It may be clearly understood by a person skilled in the art that, for the purpose of convenient and brief description, for an execution process of the corresponding method in the embodiment corresponding to S910 to S970, refer to the process described in the embodiment corresponding to S510 to S580. Details are not described herein again.

S980: The TSCTSF network element sends the first routing information associated with the identifier of the UE to a DetNet AF network element.

It should be understood that the DetNet AF network element receives the first routing information associated with an IP of the UE, and may also determine the association relationship between the IP of the UE and the first routing information.

S990: The DetNet AF network element sends the first routing information to a DetNet controller.

Based on the foregoing technical solution, a function of reporting node information to the DetNet controller based on a DetNet protocol is implemented.

The foregoing embodiment merely provides a method procedure of how to send the first routing information of the first node to the DetNet controller by using the node as an object. The DetNet controller further delivers first requirement information for the first node. However, it can be learned from the related descriptions in the foregoing embodiment that a network element in a 5GC cannot directly identify the first requirement information. In view of this, an embodiment of this application provides yet another communication method. According to the method, a function of adjusting, based on the first configuration information delivered by the DetNet controller, the session corresponding to the UE can be implemented, so that the DetNet flow is deterministically transmitted through the session of the specified UE.

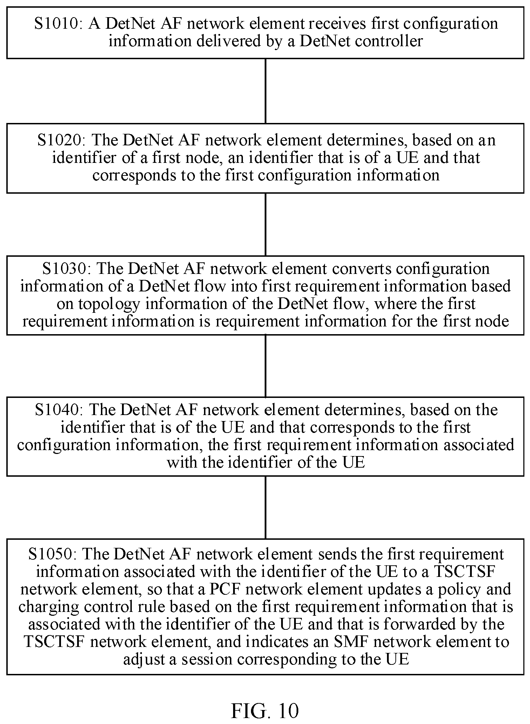

FIG. 10 is a schematic flowchart of yet another communication method according to an embodiment of this application.

S1010: A DetNet AF network element receives first configuration information delivered by a DetNet controller.

In some possible embodiments, the first requirement information may include an identifier of a first node, configuration information of a DetNet flow, and next-hop information of the first node. It should be understood that the configuration information of the DetNet flow is configuration parameter information for specifically configuring the DetNet flow.

In addition, the next-hop information of the first node may include incoming interface information, outgoing interface information, and information about a neighbor node connected to an outgoing interface that are of the first node. The incoming interface information, the outgoing interface information, and the information about the neighbor node connected to the outgoing interface that are of the first node vary with a transmission direction (uplink or downlink) of a data flow in a session corresponding to a UE.

For example, when the transmission direction of the data flow in the session is uplink transmission, the incoming interface information of the first node is relative to routing interface information of the UE, the outgoing interface information is relative to routing interface information of a UPF network element, and the information about the neighbor node connected to the outgoing interface is relative to information about a neighbor node connected to a routing interface of the UPF network element. Similarly, when the transmission direction of the data flow in the session is downlink transmission, the incoming interface information of the first node is relative to the routing interface information of the UPF, the outgoing interface information is relative to the routing interface information of the UE, and the information about the neighbor node connected to the outgoing interface is relative to information about a neighbor node connected to a routing interface of the UE.

S1020: The DetNet AF network element determines, based on the identifier of the first node, an identifier that is of the UE and that corresponds to the first configuration information.

It may be clearly understood by a person skilled in the art that, for the purpose of convenient and brief description, for an execution process in which the DetNet AF network element determines the identifier that is of the UE and that corresponds to the first configuration information, refer to the process described in the embodiment corresponding to S620. Details are not described herein again.

In some possible embodiments, the first configuration information may further include topology information of the DetNet flow.

S1030: The DetNet AF network element converts the configuration information of the DetNet flow into first requirement information based on the topology information of the DetNet flow, where the first requirement information is requirement information for the first node.

It may be clearly understood by a person skilled in the art that, for the purpose of convenient and brief description, for an execution process in which the DetNet AF network element converts the configuration information of the DetNet flow into the first requirement information, refer to the process described in the embodiment corresponding to S630. Details are not described herein again.

S1040: The DetNet AF network element determines, based on the identifier that is of the UE and that corresponds to the first configuration information, the first requirement information associated with the identifier of the UE.

S1050: The DetNet AF network element sends the first requirement information associated with the identifier of the UE to a TSCTSF network element, so that a PCF network element updates a policy and charging control rule based on the first requirement information that is associated with the identifier of the UE and that is forwarded by the TSCTSF network element, and indicates an SMF network element to adjust the session corresponding to the UE, and finally the DetNet flow is deterministically transmitted through the session of the specified UE.

In some possible embodiments, after the PCF network element updates the policy and charging control rule, the SMF may configure, by adjusting QoS, the session corresponding to the UE as a time sensitive session, so that the DetNet flow is transmitted through the session corresponding to the UE.

Based on the foregoing technical solution, the DetNet AF network element converts the first configuration information associated with the identifier of the first node into the first requirement information that is associated with the identifier of the UE and that can be identified by the PCF network element or the like, so that the SMF network element can adjust the session corresponding to the UE, and the DetNet flow is further deterministically transmitted through the session of the specified UE. In other words, based on a DetNet protocol, DetNet configuration in which the node is used as an object is implemented, and the requirement information for the DetNet flow is converted into the requirement information for the DetNet node.

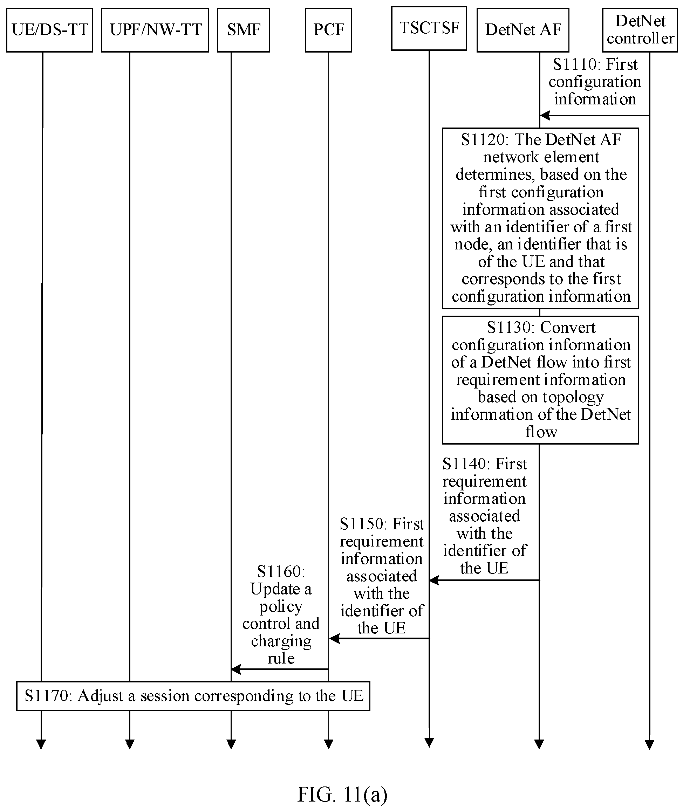

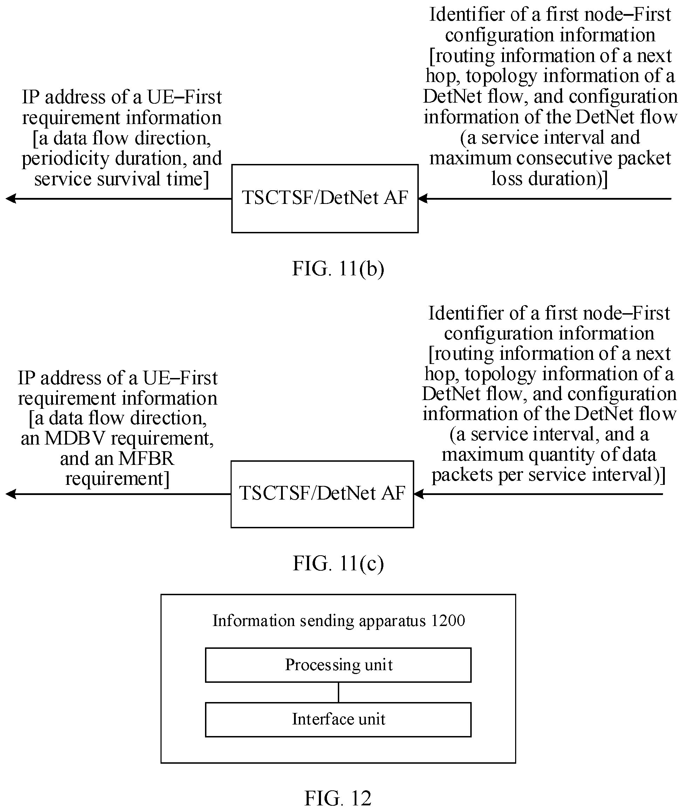

For ease of understanding, with reference to FIG. 11(a), FIG. 11(b), and FIG. 11(c), the following describes in detail a specific data exchange process between network elements in yet another communication method provided in embodiments of this application.

FIG. 11(a), FIG. 11(b), and FIG. 11(c) are diagrams of data exchange of yet another communication method according to an embodiment of this application.

FIG. 11(a) is an overall diagram of data exchange between network elements, and FIG. 11(b) and FIG. 11(c) are example diagrams of conversion of specific parameters in S1130.

S1110: A DetNet AF network element receives first configuration information from a DetNet controller.

It can be learned from the foregoing embodiment that the first requirement information may include an identifier of a first node, configuration information of a DetNet flow, next-hop information of the first node, and topology information of the DetNet flow. The next-hop information of the first node may include incoming interface information, outgoing interface information, and information about a neighbor node connected to an outgoing interface that are of the first node.

S1120: The DetNet AF network element determines, based on the first configuration information associated with the identifier of the first node, an identifier that is of a UE and that corresponds to the first configuration information.

In some possible embodiments, if the DetNet AF network element determines, by identifying the identifier that is of the first node and that is included in the first configuration information, that the identifier of the first node is the identifier of the UE, the DetNet AF network element may directly determine the identifier that is of the UE and that corresponds to the first configuration information.

In some possible embodiments, the DetNet AF network element determines, by identifying the identifier that is of the first node and that is included in the first configuration information, that the identifier of the first node is an identifier of a UPF network element, the DetNet AF network element needs to determine, based on the next-hop information of the first node and the topology information of the DetNet flow in the first requirement information, the identifier that is of the UE and that corresponds to the first configuration information.

It should be understood that the UPF may establish sessions with a plurality of UEs. Therefore, which UE has a session that is to the UPF network element and that the first requirement information is for cannot be determined based on only the identifier of the UPF network element. Therefore, even if it is determined that the identifier of the first node is the identifier of the UPF network element, the identifier that is of the UE and that corresponds to the first configuration information also needs to be determined.

In some possible embodiments, a process in which the DetNet AF network element determines, based on the next-hop information of the first node and the topology information of the DetNet flow in the first configuration information, the identifier that is of the UE and that corresponds to the first configuration information may be as follows:

The DetNet AF network element matches the next-hop information of the first node with first routing information associated with the identifier of the UE. When the incoming interface information, the outgoing interface information, and the information about the neighbor node connected to the outgoing interface respectively belong to routing interface information of the UE, routing interface information of the UPF network element, and information about a neighbor node connected to a routing interface of the UPF network element, or when the incoming interface information, the outgoing interface information, and the information about the neighbor node connected to the outgoing interface respectively belong to the routing interface information of the UPF network element, the routing interface information of the UE, and information about a neighbor node connected to a routing interface of the UE, it represents that the next-hop information of the first node successfully matches the first routing information. The DetNet AF network element has previously determined an association relationship between the identifier of the UE and the first routing information, and the first configuration information is for the DetNet flow including the first node. Therefore, the DetNet AF can determine, through such an information matching process, the identifier that is of the UE and to which the first configuration information may correspond.

S1130: The DetNet AF network element converts the configuration information of the DetNet flow into first requirement information based on the topology information of the DetNet flow, where the first requirement information is requirement information for the first node.

In some possible embodiments, the configuration information of the DetNet flow is requirement information at a flow granularity, and the DetNet AF network element may determine a quantity of nodes in the DetNet flow based on the topology information of the DetNet flow. The DetNet AF network element converts the configuration information of the DetNet flow into the first requirement information based on the quantity of nodes in the DetNet flow. It should be understood that the first requirement information is requirement information at a node granularity, and further, is the requirement information for the first node.

For example, the configuration information of the DetNet flow is a configuration of a latency requirement. For example, a specific quantity of data packets are sent within 60 ms. The topology information of the DetNet flow includes the first node, a second node, a third node, and a fourth node. The four nodes divide the DetNet flow into three segments. Therefore, the DetNet AF network element may divide the latency requirement by 3 to determine the first requirement information, and use the first requirement information as a latency requirement of the first node. In addition, a configuration parameter and a requirement parameter are different in specific representation forms. Therefore, corresponding conversion needs to be performed between the configuration parameter and the requirement parameter.

In some possible embodiments, the DetNet AF prestores a mapping relationship between the configuration parameter in the configuration information of the DetNet flow and the requirement parameter in the first requirement information. In most cases, only specific parameter names are replaced between the configuration parameter and the requirement parameter, in other words, some configuration parameter values are in one-to-one correspondence with requirement parameter values. Certainly, in the foregoing embodiment, when the TSCTSF network element performs parameter mapping, the method is also applicable. However, some configuration parameter values can be mapped to requirement parameter values only after some calculation processing is performed. For ease of understanding, with reference to FIG. 11(b) and FIG. 11(c), the following uses two special parameters as examples to describe in detail a process of converting a specific configuration parameter of the DetNet flow into a specific requirement parameter.

As shown in FIG. 11(b), the DetNet AF network element or the TSCTSF network element receives the first requirement information that is associated with the identifier of the first node and that is delivered by the DetNet controller.

For example, the first requirement information may be in the following form:

first requirement information [routing information of a next hop, the topology information of the DetNet flow, and the configuration information of the DetNet flow (a service interval (Interval), and maximum tolerable consecutive packet loss duration (MaxConsecutiveLossTolerance))].

It should be understood that, through the process of matching the next-hop information of the first node with the first routing information associated with the identifier of the UE in S1120, whether an incoming routing interface of the DetNet flow is on a UE side or a UPF side or an outgoing routing interface is on the UE side or the UPF side can be determined, so that whether a converted data flow should be uplink data or downlink data can be determined, in other words, a direction of the data flow is determined.

In some possible embodiments, the DetNet AF network element or the TSCTSF network element stores the mapping relationship between the configuration parameter and the requirement parameter. In a requirement parameter set, only service survival time (Survival Time) can be mapped to the configuration parameter MaxConsecutiveLossTolerance, but numerical replacement cannot be directly performed. Therefore, the following data calculation processing needs to be performed.

The DetNet AF network element or the TSCTSF network element completes parameter conversion according to the following formula (1):

$$\text{Survival Time} = \frac{\text{MaxConsecutiveLossTolerance}}{\text{MaxPacketPerInterval}} \times \text{Interval} \qquad (1)$$

MaxPacketPerInterval represents a maximum quantity of sent packets per interval, and Survival Time specifically means duration in which no data transmission is performed and a service is not stopped.

Then, the DetNet AF network element or the TSCTSF network element divides, based on the topology information of the DetNet flow, the obtained Survival Time into requirement information at a DetNet node (first node) granularity.

It should be understood that a requirement information parameter obtained through the foregoing data processing is a related parameter in a TSC protocol, and may be further delivered to a RAN in a form of time sensitive communication assistance information (TSC assistance information, TSCAI), to complete a corresponding requirement configuration process. For example, the TSCAI includes the following parameters: a data flow transmission direction (Flow Direction), a periodicity (Periodicity), burst data arrival time (Burst Arrival time), and the service survival time (Survival Time).

Based on the foregoing technical solution, a specific DetNet parameter can be converted into a parameter related to a transmission requirement of a communication system, so that an SMF adjusts QoS based on the parameter, and the DetNet flow is transmitted through a session corresponding to the UE.

Similarly, as shown in FIG. 11(c), the DetNet AF network element or the TSCTSF network element receives the first requirement information that is associated with the identifier of the first node and that is delivered by the DetNet controller.

For example, the first requirement information may be in the following form:

first configuration information [routing information of a next hop, the topology information of the DetNet flow, and the configuration information of the DetNet flow (a service interval (Interval), a protocol type (Protocol type), a maximum data payload (MaxPayloadSize), and a maximum quantity of data packets per service interval (MaxPacketsNumPerInterval))].

In some possible embodiments, the topology information of the DetNet flow may be used as an optional item.

It should be understood that, through the process of matching the next-hop information of the first node with the first routing information associated with the identifier of the UE in S1120, whether an incoming routing interface of the DetNet flow is on a UE side or a UPF side or an outgoing routing interface is on the UE side or the UPF side can be determined, so that whether a converted data flow should be uplink data or downlink data can be determined, in other words, a direction of the data flow is determined.

In some possible embodiments, the DetNet AF network element or the TSCTSF network element stores the mapping relationship between the configuration parameter and the requirement parameter. However, in a requirement parameter set, only a combination of a maximum data burst volume (MDBV) and a maximum flow bit rate (MFBR) can be mapped to the configuration parameter MaxPacketsNumPerInterval, but numerical replacement cannot be directly performed. Therefore, the following data calculation processing needs to be performed.

First, the DetNet AF network element or the TSCTSF network element determines, based on a protocol type, a header size of a data packet transmitted according to a protocol, and completes parameter conversion according to the following formulas (2) and (3):

$$MDBV = \left(MaxHeadSize + MaxPayloadSize\right) \times MaxPacketsNumPerInterval \qquad (2)$$

$$MFBR = \frac{MDBV}{Interval} \qquad (3)$$

MaxHeadsize represents the header size of the data packet. Similar to the foregoing TSCAI, the MDBV and the MFBR are also QoS flow-related parameters of a 5G QoS identifier (5G QoS identifier, 5QI).

Then, the DetNet AF network element or the TSCTSF network element divides, based on the topology information of the DetNet flow, the obtained MDBV and MDBR into requirement information at a DetNet node (first node) granularity.

It should be understood that the MDBV directly sent by the TSCTSF to a PCF network element may alternatively be replaced with another name with a similar meaning, for example, a maximum burst size (Max burst size). This is not limited in this embodiment of this application.

In some possible embodiments, 5QI parameters designed in the application scenario may further include a default maximum data burst volume (Default Maximum Data Burst Volume). In addition, in addition to the 5QI parameter, parameters of a current QoS flow may further include bandwidth information such as a guaranteed flow bit rate (Guaranteed Flow Bit Rate) and a maximum flow bit rate (Maximum Flow Bit Rate).

In some possible embodiments, the DetNet AF network element or the TSCTSF network element may alternatively first divide the configuration information of the DetNet flow into configuration information at a DetNet node (first node) granularity based on the topology information of the DetNet flow, and then convert the configuration information for the first node into the requirement information for the first node based on the foregoing technical solution.

Based on the foregoing technical solution, a specific DetNet parameter can be converted into a parameter related to a transmission requirement of a communication system, and the parameter may be a QoS flow-related parameter of the 5QI, so that an SMF adjusts QoS based on the parameter, and the DetNet flow is transmitted through a session corresponding to the UE.

S1140: The DetNet AF network element sends the first requirement information associated with the identifier of the UE to the TSCTSF network element.

It should be understood that, in S1120, the DetNet AF network element determines an association relationship between the identifier of the UE and the first configuration information, and the first requirement information is obtained through conversion based on the first configuration information. Therefore, the DetNet AF network element can determine the first requirement information associated with the identifier of the UE, and can use the first requirement information as requirement information for the session corresponding to the UE in the first node.

S1150: The TSCTSF sends the first requirement information associated with the identifier of the UE to the PCF network element.

S1160: The PCF network element updates a policy control and charging rule based on the first requirement information associated with the identifier of the UE, and indicates the SMF to adjust the session corresponding to the UE.

S1170: The SMF network element adjusts, based on the second requirement information, the session corresponding to the UE.

It should be understood that the adjustment of the session corresponding to the UE is to deterministically transmit the DetNet flow through the session of the specified UE.

Based on the foregoing technical solution, the DetNet AF network element converts the first configuration information associated with the identifier of the first node into the first requirement information that is associated with the identifier of the UE and that can be identified by the TSCTSF network element, the PCF network element, and the like, so that the SMF network element can adjust the session corresponding to the UE. In other words, based on a DetNet protocol, DetNet configuration in which the node is used as an object is implemented, and the requirement information for the DetNet flow is converted into the requirement information for the DetNet node.

An embodiment of this application further provides an apparatus configured to implement any one of the foregoing methods, for example, provides an information sending apparatus. The apparatus may be a submodule integrated into the UE, the UPF network element, the SMF network element, the PCF network element, or the TSCTSF network element described in the embodiments in FIG. 4 to FIG. 7, including units (or means) configured to implement any one of the foregoing communication methods.

FIG. 12 is a block diagram of an information sending apparatus 1200 according to an embodiment of this application. The information sending apparatus 1200 may correspond to (for example, may be configured as or may be) the UE, the UPF network element, the SMF network element, the PCF network element, or the TSCTSF network element described in the embodiments in FIG. 4 to FIG. 7, and modules or units in the information sending apparatus 1200 are respectively configured to perform actions or processing processes performed by the UE, the UPF network element, the SMF network element, the PCF network element, or the TSCTSF network element described in the embodiments in FIG. 4 to FIG. 7. To avoid repetition, detailed descriptions thereof are omitted.

In this embodiment of this application, the apparatus 1200 may be the UE, the UPF network element, the SMF network element, the PCF network element, or the TSCTSF network element described in the embodiments in FIG. 4 to FIG. 7. In this case, the apparatus 1200 may include a processor and a transceiver, and the processor and the transceiver are communicatively connected.

Optionally, the apparatus further includes a memory, and the memory is communicatively connected to the processor. Optionally, the processor, the memory, and the transceiver may be communicatively connected. The memory may be configured to store a program or instructions. The processor is configured to execute the program or the instructions stored in the memory, to control the transceiver to send information or a signal.

In this case, an interface unit in the apparatus 1200 shown in FIG. 12 may correspond to the transceiver, and a processing unit in the apparatus 1200 shown in FIG. 12 may correspond to the processor.

In this embodiment of this application, the apparatus 1200 may be a chip (or a chip system) mounted in the UE, the UPF network element, the SMF network element, the PCF network element, or the TSCTSF network element described in the embodiments in FIG. 4 to FIG. 7. In this case, the apparatus 1200 may include a processor and an input/output interface, where the processor may be communicatively connected, through the input/output interface, to a transceiver in the UE, the UPF network element, the SMF network element, the PCF network element, or the TSCTSF network element described in the embodiments in FIG. 4 to FIG. 7. Optionally, the apparatus further includes a memory, and the memory is communicatively connected to the processor. Optionally, the processor, the memory, and the transceiver may be communicatively connected. The memory may be configured to store a program or instructions. The processor is configured to execute the program or the instructions stored in the memory, to control the transceiver to send information or a signal.

In this case, an interface unit in the apparatus 1200 shown in FIG. 12 may correspond to the input/output interface, and a processing unit in the apparatus 1200 shown in FIG. 12 may correspond to the processor.

An embodiment of this application further provides an apparatus configured to implement any one of the foregoing methods, for example, provides an information receiving apparatus. The apparatus may be a submodule integrated into the UE, the UPF network element, the SMF network element, the PCF network element, the TSCTSF network element, or the DetNet AF network element described in the embodiments in FIG. 8 to FIG. 11(a), FIG. 11(b), and FIG. 11(c), including units (or means) configured to implement any one of the foregoing communication methods.

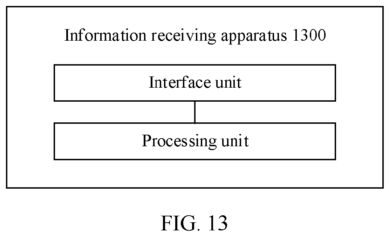

FIG. 13 is a block diagram of an information receiving apparatus 1300 according to an embodiment of this application. The information receiving apparatus 1300 may correspond to (for example, may be configured to implement) the UE, the UPF network element, the SMF network element, the PCF network element, the TSCTSF network element, or the DetNet AF network element described in the embodiments in FIG. 8 to FIG. 11(a), FIG. 11(b), and FIG. 11(c), and modules or units in the information receiving apparatus 1300 are respectively configured to perform actions or processing processes performed by the UE, the UPF network element, the SMF network element, the PCF network element, the TSCTSF network element, or the DetNet AF network element described in the embodiments in FIG. 8 to FIG. 11(a), FIG. 11(b), and FIG. 11(c). To avoid repetition, detailed descriptions thereof are omitted.

In this embodiment of this application, the apparatus 1300 may be the UE, the UPF network element, the SMF network element, the PCF network element, the TSCTSF network element, or the DetNet AF network element described in the embodiments in FIG. 8 to FIG. 11(a), FIG. 11(b), and FIG. 11(c). In this case, the apparatus 1300 may include a processor and a transceiver, and the processor is communicatively connected to the transceiver. Optionally, the apparatus further includes a memory, and the memory is communicatively connected to the processor. Optionally, the processor, the memory, and the transceiver may be communicatively connected. The memory may be configured to store a program or instructions. The processor is configured to execute the program or the instructions stored in the memory, to control the transceiver to receive information or a signal.

In this case, an interface unit in the apparatus 1300 shown in FIG. 13 may correspond to the transceiver, and a processing unit in the apparatus 1300 shown in FIG. 13 may correspond to the processor.

In this embodiment of this application, the apparatus 1300 may be a chip (or a chip system) mounted in the UE, the UPF network element, the SMF network element, the PCF network element, the TSCTSF network element, or the DetNet AF network element described in the embodiments in FIG. 8 to FIG. 11(a), FIG. 11(b), and FIG. 11(c). In this case, the apparatus 1300 may include a processor and an input/output interface, where the processor may be communicatively connected, through the input/output interface, to a transceiver in the UE, the UPF network element, the SMF network element, the PCF network element, the TSCTSF network element, or the DetNet AF network element described in the embodiments in FIG. 8 to FIG. 11(a), FIG. 11(b), and FIG. 11(c). Optionally, the apparatus further includes a memory, and the memory is communicatively connected to the processor. Optionally, the processor, the memory, and the transceiver may be communicatively connected. The memory may be configured to store a program or instructions. The processor is configured to execute the program or the instructions stored in the memory, to control the transceiver to receive information or a signal.

**In** this case, an interface unit in the apparatus 1300 shown in FIG. 13 may correspond to the input interface, and a processing unit in the apparatus 1300 shown in FIG. 13 may correspond to the processor.

A person of ordinary skill in the art may be aware that the units and algorithm steps in the examples described with reference to embodiments disclosed in this specification may be implemented by electronic hardware or a combination of computer software and electronic hardware. Whether these functions are performed by hardware or software depends on particular applications and design constraint conditions of the technical solutions. A person skilled in the art may use different methods to implement the described functions for a specific application, but it should not be considered that the implementation goes beyond the scope of the present invention.

It may be clearly understood by a person skilled in the art that, for the purpose of convenient and brief description, for specific working processes of the foregoing systems, apparatuses, and units, refer to corresponding processes in the foregoing method embodiments. Details are not described herein again.

**In** several embodiments provided in this application, it should be understood that the disclosed systems, apparatuses, and methods may be implemented in other manners. For example, the apparatus embodiments described above are merely examples. For example, division into the units is merely logical function division and may be other division during actual implementation. For example, a plurality of units or components may be combined or integrated into another system, or some features may be ignored or not performed. **In** addition, the displayed or discussed mutual couplings or direct couplings or communication connections may be implemented through some interfaces. The indirect couplings or communication connections between the apparatuses or units may be implemented in an electronic, a mechanical, or another form.

The units described as separate parts may or may not be physically separate, and parts displayed as units may or may not be physical units, in other words, may be located in one position, or may be distributed on a plurality of network units. A part or all of the units may be selected based on an actual requirement to achieve objectives of the solutions of embodiments.

**In** addition, functional units in embodiments of the present invention may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on this understanding, the technical solutions of the present invention essentially, or the part contributing to a conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of the present invention. The foregoing storage medium includes media such as a USB flash drive, a removable hard disk, a read-only memory (Read-Only Memory, ROM), a random access memory (Random Access Memory, RAM), a magnetic disk, an optical disc, or the like, that can store program code.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A communication method, comprising:

   receiving, by a network element from a controller, configuration information and information about a first node;
   determining, by the network element, an identifier of a terminal device based on the information about the first node;
   determining, by the network element, first requirement information based on the configuration information, wherein the first requirement information is for adjusting a session of the terminal device; and
   sending, by the network element, the first requirement information to a policy control function network element, wherein
   the configuration information comprises a parameter for configuring a flow, the flow is a flow between the terminal device and a second node, and the first node is a node that is between the terminal device and the second node and that is for transmission of the flow.

2. The method according to claim 1, wherein the sending, by the network element, the first requirement information to a policy control function network element comprises:

sending, by the network element, a message to the policy control function network element, wherein the message comprises the first requirement information and the identifier of the terminal device.

3. The method according to claim 1 or 2, wherein before the receiving, by a network element from a controller, configuration parameter information for configuring a flow and information about a first node, the method further comprises:

receiving, by the network element, routing information, wherein the routing information comprises a second identifier and routing interface information; and
the determining, by the network element, an identifier of a terminal device based on the information about the first node comprises:
when the information about the first node matches the routing interface information, determining, by the network element, the second identifier as the identifier of the terminal device.

4. The method according to claim 3, wherein the information about the first node comprises incoming interface information, outgoing interface information, and neighbor node information, and the routing interface information comprises routing interface information of a terminal device corresponding to the second identifier, routing interface information of a user plane function network element, and neighbor node information of the user plane function network element; and the second node is a network device, the flow is an uplink flow between the terminal device and the network device, and when the information about the first node matches the routing interface information,

the incoming interface information corresponds to the routing interface information of the terminal device corresponding to the second identifier;
the outgoing interface information corresponds to the routing interface information of the user plane function network element; and
the neighbor node information corresponds to the neighbor node information of the user plane function network element.

5. The method according to claim 3, wherein the information about the first node comprises incoming interface information, outgoing interface information, and neighbor node information, and the routing interface information comprises routing interface information of a terminal device corresponding to the second identifier, routing interface information of a user plane function network element, and neighbor node information of the terminal device corresponding to the second identifier; and

the second node is a network device, the flow is a downlink flow between the terminal device and the network device, and when the information about the first node matches the routing interface information,
the incoming interface information corresponds to the routing interface information of the user plane function network element;
the outgoing interface information corresponds to the routing interface information of the terminal device corresponding to the second identifier; and
the neighbor node information corresponds to the neighbor node information of the terminal device corresponding to the second identifier.

6. The method according to any one of claims 1 to 5, wherein the flow is a deterministic network flow, and the network element is a time sensitive communication and time synchronization function network element.

7. A communication method, comprising:

receiving, by a time sensitive communication and time synchronization function TSCTSF network element, first configuration information delivered by a deterministic network DetNet controller, wherein the first configuration information carries an identifier of a first node and next-hop information of the first node, the first node is configured to configure a DetNet flow based on the first configuration information, to adjust a session corresponding to a terminal device UE, the first node comprises the UE and a user plane function UPF network element, and the first node is a node in the DetNet flow; and
determining, by the TSCTSF network element based on the identifier of the first node, an identifier that is of the UE and that corresponds to the first configuration information, to determine the session that is of the UE and that corresponds to the first configuration information.

8.  A communication method, comprising:

    receiving, by a deterministic network application function DetNet AF network element, first configuration information delivered by a DetNet controller, wherein the first configuration information carries an identifier of a first node and next-hop information of the first node, the first node is configured to configure a DetNet flow based on the first configuration information, to adjust a session corresponding to a UE, the first node comprises the UE and a user plane function UPF network element, and the first node is a node in the DetNet flow; and determining, by the DetNet AF network element based on the identifier of the first node, an identifier that is of the UE and that corresponds to the first configuration information, to determine the session that is of the UE and that corresponds to the first configuration information.

9.  A communication apparatus, comprising:
    a processor, wherein the processor is coupled to a memory, and the memory is configured to store a program or instructions; and when the program or the instructions are executed by the processor, the apparatus is enabled to perform the communication method according to any one of claims 1 to 8.

10. A communication apparatus, comprising a module configured to implement the method according to any one of claims 1 to 8.

11. A computer-readable storage medium, wherein the computer-readable storage medium stores a computer program; and when the computer program is run on a computer, the computer is enabled to perform the communication method according to any one of claims 1 to 8.

12. A chip, comprising a processor, wherein the processor is configured to perform the method according to any one of claims 1 to 8.

13. A computer program product, wherein the computer program product comprises a computer program or instructions; and when the computer program or the instructions are executed by a computer, the computer is enabled to perform the communication method according to any one of claims 1 to 8.

14. A communication system, comprising the communication apparatus according to claim 10 and a policy control function network element, wherein the policy control function network element is configured to receive first requirement information from the communication apparatus.

15. A communication method, comprising:

    receiving, by a network element from a controller, configuration information and information about a first node; determining, by the network element, an identifier of a terminal device based on the information; determining, by the network element, first requirement information based on the configuration parameter information; sending, by the network element, the first requirement information to a policy control function network element; and adjusting, by the policy control function network element, a session of the terminal device based on the first requirement information, wherein the configuration information comprises a parameter for configuring a flow, the flow is a flow between the terminal device and a second node, and the first node is a node that is between the terminal device and the second node and that is for transmission of the flow.

FIG. 1

FIG. 2

FIG. 3

S410: A TSCTSF network element receives an identifier of a first node from a PCF network element

S420: The TSCTSF network element determines first routing information, where the first routing information includes the identifier of the first node, routing interface information, and information about a neighbor node connected to a routing interface

S430: The TSCTSF network element sends the first routing information to a DetNet controller

FIG. 4

FIG. 5

S610: A TSCTSF network element receives first configuration information delivered by a DetNet controller

S620: The TSCTSF network element determines, based on an identifier of a first node, an identifier that is of a UE and that corresponds to the first configuration information

S630: The TSCTSF network element converts configuration information of a DetNet flow into first requirement information based on topology information of the DetNet flow, where the first requirement information is requirement information for the first node

S640: The TSCTSF network element determines, based on the identifier that is of the UE and that corresponds to the first configuration information, the first requirement information associated with the identifier of the UE

S650: The TSCTSF network element sends the first requirement information associated with the identifier of the UE to a PCF network element, so that the PCF network element updates a policy and charging control rule based on the first requirement information associated with the identifier of the UE, and indicates an SMF network element to adjust a session corresponding to the UE

FIG. 6

```
UE/        UPF/        SMF        PCF       TSCTSF      DetNet
DS-TT      NW-TT                                      controller
```

S710: First
requirement
information

S720: Determine, based on an
identifier of a first node, an
identifier that is of the UE and
that corresponds to the first
requirement information

S730: Convert configuration
information of a DetNet flow
into the first requirement
information based on topology
information of the DetNet flow

S740: First
requirement
information
associated with
the identifier of
the UE

S750: Update
a policy
control and
charging rule

S760: Adjust a session corresponding to the UE

FIG. 7

S810: A DetNet AF network element receives, from
a TSCTSF network element, first routing information
associated with an identifier of a terminal device UE

S820: The DetNet AF network element sends the
first routing information to a DetNet controller

FIG. 8

| UE/DS-TT | UPF/NW-TT | SMF | PCF | TSCTSF | DetNet AF | DetNet controller |
|---|---|---|---|---|---|---|

S910: Session request information

S920: Identifier of a first node

S930: Identifier of the first node

S940: Establish a session for the UE

S950: UE routing information

S960: UPF routing information

S970: Determine first routing information and an association relationship between an identifier of the UE and the first routing information

S980: First routing information associated with the identifier of the UE

S990: First routing information

FIG. 9

S1010: A DetNet AF network element receives first configuration information delivered by a DetNet controller

S1020: The DetNet AF network element determines, based on an identifier of a first node, an identifier that is of a UE and that corresponds to the first configuration information

S1030: The DetNet AF network element converts configuration information of a DetNet flow into first requirement information based on topology information of the DetNet flow, where the first requirement information is requirement information for the first node

S1040: The DetNet AF network element determines, based on the identifier that is of the UE and that corresponds to the first configuration information, the first requirement information associated with the identifier of the UE

S1050: The DetNet AF network element sends the first requirement information associated with the identifier of the UE to a TSCTSF network element, so that a PCF network element updates a policy and charging control rule based on the first requirement information that is associated with the identifier of the UE and that is forwarded by the TSCTSF network element, and indicates an SMF network element to adjust a session corresponding to the UE

FIG. 10

FIG. 11(a)

IP address of a UE–First requirement information [a data flow direction, periodicity duration, and service survival time] ← TSCTSF/DetNet AF ← Identifier of a first node–First configuration information [routing information of a next hop, topology information of a DetNet flow, and configuration information of the DetNet flow (a service interval and maximum consecutive packet loss duration)]

FIG. 11(b)

IP address of a UE–First requirement information [a data flow direction, an MDBV requirement, and an MFBR requirement] ← TSCTSF/DetNet AF ← Identifier of a first node–First configuration information [routing information of a next hop, topology information of a DetNet flow, and configuration information of the DetNet flow (a service interval, and a maximum quantity of data packets per service interval)]

FIG. 11(c)

Information sending apparatus 1200

Processing unit

Interface unit

FIG. 12

Information receiving apparatus 1300

Interface unit

Processing unit

FIG. 13

## INTERNATIONAL SEARCH REPORT

International application No.

**PCT/CN2023/111411**

### A. CLASSIFICATION OF SUBJECT MATTER

H04W40/02(2009.01)i

According to International Patent Classification (IPC) or to both national classification and IPC

### B. FIELDS SEARCHED

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 时延, 敏感, 同步, 确定性, 网络, 标识, 用户面, 策略控制功能, 需求, 会话, 配置, 路由, 中间节点, delay, sensitive, time, synchronization, deterministic, DetNet, user, pcf, need, session, disposition, middle, node, route

### C. DOCUMENTS CONSIDERED TO BE RELEVANT

| Category* | Citation of document, with indication, where appropriate, of the relevant passages | Relevant to claim No. |
|---|---|---|
| X | CN 114071499 A (HUAWEI TECHNOLOGIES CO., LTD.) 18 February 2022 (2022-02-18) description, paragraphs [0218]-[0307] | 1, 2, 9-15 |
| A | CN 114071494 A (HUAWEI TECHNOLOGIES CO., LTD.) 18 February 2022 (2022-02-18) entire document | 1-15 |
| A | US 2021243641 A1 (HUAWEI TECHNOLOGIES CO., LTD.) 05 August 2021 (2021-08-05) entire document | 1-15 |
| A | US 2021250787 A1 (NOKIA TECHNOLOGIES OY) 12 August 2021 (2021-08-12) entire document | 1-15 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 October 2023** | **06 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/111411**

| Patent document cited in search report | | | Publication date (day/month/year) | Patent family member(s) | | | Publication date (day/month/year) |
|---|---|---|---|---|---|---|---|
| CN | 114071499 | A | 18 February 2022 | None | | | |
| CN | 114071494 | A | 18 February 2022 | None | | | |
| US | 2021243641 | A1 | 05 August 2021 | None | | | |
| US | 2021250787 | A1 | 12 August 2021 | US | 11770722 | B2 | 26 September 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210957899